# EUROPEAN PATENT APPLICATION

(11) **EP 4 826 830 A1**
(43) Date of publication of application: **21.10.2026**
(21) Application number: 26155621.1
(22) Date of filing: 02.02.2026
(51) Int. Cl.: H01M 10/0585, H01M 4/485, H01M 4/66, H01M 50/124, H01M 50/207, H01M 50/233

(54) **SECONDARY BATTERY AND BATTERY PACK**

(30) Priority: 18.04.2025 JP 2025068876
(71) Applicant: KABUSHIKI KAISHA TOSHIBA, Kawasaki-shi, Kanagawa (JP)
(72) Inventor: Murata, Yoshiaki, Kawasaki-shi, Kanagawa (JP); Ueda, Kakuya, Kawasaki-shi, Kanagawa (JP); Hoshina, Keigo, Kawasaki-shi, Kanagawa (JP); Harada, Yasuhiro, Kawasaki-shi, Kanagawa (JP); Yasumiishi, Hirofumi, Kawasaki-shi, Kanagawa (JP); Nakazawa, Toshitada, Kawasaki-shi, Kanagawa (JP); Watanabe, Hidetoshi, Kawasaki-shi, Kanagawa (JP)
(74) Representative: Hoffmann Eitle

(57) **Abstract**

In general, according to one approach, a secondary battery (100) including a container member (2), an electrode group (1) having a stacked structure including one electrode (5), the other electrode (3), and a separator (4). At least one side of the one electrode (5) protrudes more than at least one side of the other electrode (3) in a direction intersecting a stacking direction of the electrode group (1). The electrode group (1) satisfies the following formula (1): $Ra 2 > Ra 1$ (1) where the Ra2 is an arithmetic average roughness of an end portion including the at least one side of the one electrode (5) in the electrode group (1), and the Ra1 is an arithmetic average roughness of an interior portion adjacent to the end portion of the electrode group (1).

## Description

### FIELD

This disclosure relates generally to a secondary battery and a battery pack.

### BACKGROUND

A battery using an electrode containing a niobium titanium-containing oxide has a problem that an increase in battery size causes wave-shaped deformation on a surface of the battery, and lowers thermal uniformity. A decrease in thermal uniformity of the battery leads to a decrease in life performance.

### BRIEF DESCRIPTION OF DRAWINGS

FIG. 1 is a partially cut-out perspective view schematically illustrating an example of a secondary battery according to an approach.
FIG. 2 is an enlarged cross-sectional view of a section A of the secondary battery illustrated in FIG. 1.
FIG. 3 is a plan view illustrating an outline of an electrode group of the secondary battery illustrated in FIG. 1.
FIG. 4 is a cross-sectional view of the electrode group illustrated in FIG. 3 taken along line IV-IV.
FIG. 5 is a perspective view illustrating a relationship between a part of a long side portion of the electrode group illustrated in FIG. 3 and a projected area thereof.
FIG. 6 is a cross-sectional view schematically illustrating a state in which the electrode group illustrated in FIG. 3 is placed on a jig for measuring an arithmetic average roughness.
FIG. 7 is a cross-sectional view schematically illustrating a method for measuring an arithmetic average roughness of the electrode group illustrated in FIG. 3.
FIG. 8 is a cross-sectional view schematically illustrating a definition of the arithmetic average roughness.
FIG. 9 is a cross-sectional view schematically illustrating another example of the secondary battery according to the approach.
FIG. 10 is a perspective view schematically illustrating an electrode group of the secondary battery illustrated in FIG. 9.
FIG. 11A is a plan view schematically illustrating the electrode group illustrated in FIG. 10.
FIG. 11B is a cross-sectional view schematically illustrating a cross section of the electrode group illustrated in FIG. 10 taken along a thickness direction.
FIG. 12 is a cross-sectional view of a vicinity of an end surface of the electrode group of the secondary battery illustrated in FIG. 9 taken along a winding axis direction.
FIG. 13 is a side view schematically illustrating a state in an initial charging step in manufacturing the secondary battery according to the approach.
FIG. 14 is an exploded perspective view schematically illustrating an example of a battery pack according to an approach.
FIG. 15 is a block diagram illustrating an example of an electric circuit of the battery pack illustrated in FIG. 14.

### DETAILED DESCRIPTION

In general, according to one approach, a secondary battery including:
a container member;
an electrode group provided in the container member and having a stacked structure including one electrode, the other electrode, and a separator provided at least between the one electrode and the other electrode; and
an electrolyte provided in the container member.

At least one side of the one electrode protrudes more than at least one side of the other electrode in a direction intersecting a stacking direction of the electrode group. The electrode group satisfies the following formula (1): $Ra 2 > Ra 1$ (1) where the Ra2 is an arithmetic average roughness of an end portion including the at least one side of the one electrode in the electrode group, and the Ra1 is an arithmetic average roughness of an interior portion adjacent to the end portion of the electrode group.

According to the approach, a battery pack including the secondary battery according to the approach.

As a result of intensive studies, the present inventors have found the following findings. If a ductile material such as aluminum or an aluminum alloy is used in a current collector of an electrode using an active material capable of causing a volume change by charging and discharging, such as a niobium titanium-containing oxide, and a battery having a flat portion is manufactured using the electrode obtained in such a manner, a surface of the battery is likely to be deformed into a wavy shape due to the volume change. As a result, the thermal uniformity at the time of use, for example, at the time of charging and discharging of the battery is lowered. Specifically, in a case where a plurality of batteries are housed in a housing or the like to form a battery module or a battery pack, deformation of the batteries into, for example, a wavy shape in a thickness direction may generate an air gap between the batteries, whereby heat may be trapped between the batteries. As a result of intensive studies on a method for reducing the deformation into such a wavy shape, it has been found that, when the deformation is completely eliminated, liquid electrolyte retention at a battery outer edge portion may be deteriorated, and the life performance may be deteriorated. As a result of intensively searching for a factor for the deterioration, it has been found that the deformation of the battery outer edge portion into a wavy shape due to the volume change can improve the liquid retention for the electrolytic solution and exhibits a good effect on the life performance. That is, the present inventors have revealed that a surface having a roughness larger than the surface roughness of the flat portion is preferably located at the outer edge portion located outside the flat portion of the battery. The flat portion having a small surface roughness can ensure thermal uniformity in the battery, and therefore can ensure life performance. On the other hand, since the outer edge portion having a large surface roughness can enhance electrolyte retention, the life performance can be improved.

Approaches will be described later with reference to the drawings. The same reference signs are applied to common components throughout the approaches and overlapped explanations are thereby omitted. Each drawing is a schematic view for encouraging explanations of the approach and understanding thereof, and thus there are some details in which a shape, a size and a ratio are different from those in an actual device; they can however be appropriately design-changed, taking into account the following explanations and known technology.

### (First Approach)

According to a first approach, a secondary battery is provided. The secondary battery includes a container member, an electrode group housed in the container member, and an electrolyte housed in the container member. The electrode group has a stacked structure including one electrode, the other electrode, and a separator positioned at least between the one electrode and the other electrode. In a direction intersecting a stacking direction of the electrode group, at least one side portion of the one electrode protrudes more than at least one side portion of the other electrode. The electrode group satisfies the following formula (1). $Ra 2 > Ra 1$ (1)

In the formula (1), the Ra2 is an arithmetic average roughness of an end portion including at least the one side portion of the one electrode of the electrode group, and the Ra1 is an arithmetic average roughness of an interior portion adjacent to the end portion of the electrode group.

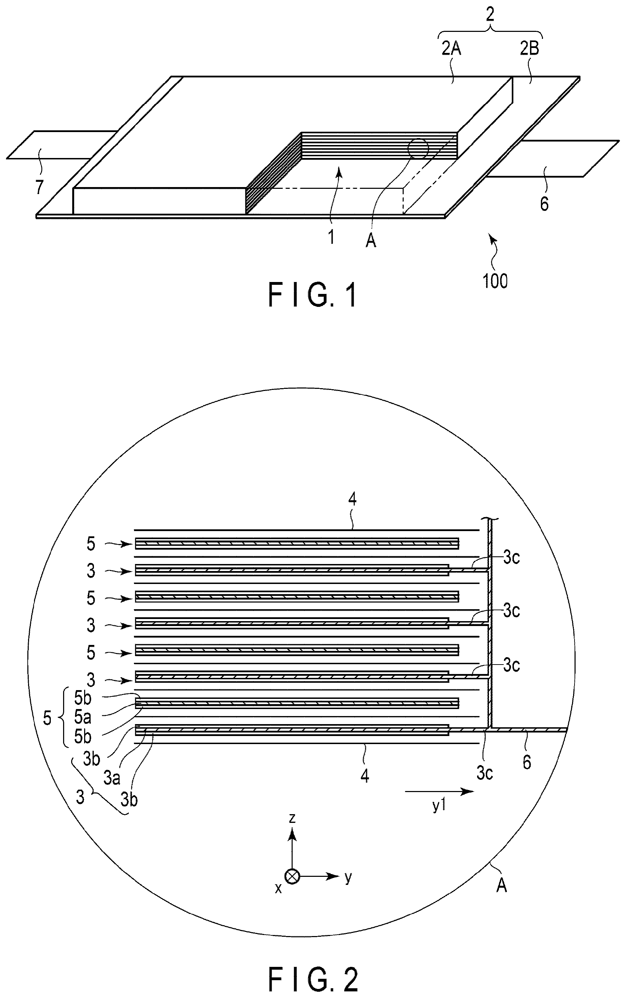

The secondary battery according to the approach will be described with reference to FIGS. 1 to 10. In the example illustrated in FIGS. 1 to 10, the secondary battery is assumed to include a negative electrode as the one electrode and a positive electrode as the other electrode. In each drawing, an electrode stacking direction is assumed to be parallel to the z-axis direction. A surface substantially perpendicularly intersecting the electrode stacking direction is assumed to be parallel to the xy plane.

A secondary battery 100 as illustrated in FIGS. 1 and 2 includes an electrode group 1 as illustrated in FIGS. 1 and 2, a container member 2 as illustrated in FIG. 1, and an electrolyte which is not illustrated. The electrode group 1 and the electrolyte are housed in the container member 2. The electrolyte is held in the electrode group 1.

The container member 2 is made of a laminate film including two resin layers and a metal layer sandwiched between the resin layers. The container member 2 includes an electrode group housing portion 2A and a sealing portion 2B adjacent to one long side and two short sides of the electrode group housing portion 2A. A thermoplastic resin layer is provided on an inner surface of the sealing portion 2B, and the sealing portion 2B is sealed by thermally fusing the thermoplastic resin layer.

As illustrated in FIG. 2, the electrode group 1 is a stack-type electrode group. The stack-type electrode group 1 has a structure in which positive electrodes 3 and negative electrodes 5 are alternately stacked in the z-axis direction with a separator 4 interposed therebetween. The electrode group 1 has a substantially flat shape. In the electrode group 1, two surfaces intersecting the electrode stacking direction (thickness direction or z-axis direction) are the outermost layers. In the case of FIG. 2, the outermost layer is the separator 4. The outermost layer is not limited to the separator 4, and may be the positive electrode 3 or the negative electrode 5.

The electrode group 1 includes a plurality of the positive electrodes 3. Each of the positive electrodes 3 includes a positive electrode current collector 3a and positive electrode active material-containing layers 3b supported on both sides of the positive electrode current collector 3a. The electrode group 1 further includes a plurality of the negative electrodes 5. Each of the negative electrodes 5 includes a negative electrode current collector 5a and negative electrode active material-containing layers 5b supported on both sides of the negative electrode current collector 5a.

The positive electrode current collector 3a of each of the positive electrodes 3 includes, at one side portion parallel to the x-axis direction, a portion where the positive electrode active material-containing layer 3b is not supported on either surface. This portion serves as a positive electrode collector tab 3c. A plurality of positive electrode collector tabs 3c are electrically connected to a belt-shaped positive electrode terminal 6. A tip of the belt-shaped positive electrode terminal 6 is extended along the y-axis direction and drawn outside from the container member 2.

Although not illustrated, the negative electrode current collector 5a of each of the negative electrodes 5 includes, at one side portion parallel to the x-axis direction, a portion where the negative electrode active material-containing layer 5b is not supported on either surface. This portion serves as a negative electrode collector tab. The negative electrode collector tab is located on an opposite side of the electrode group 1 with respect to the positive electrode collector tab 3c. The negative electrode collector tab is electrically connected to a belt-shaped negative electrode terminal 7. A tip of the belt-shaped negative electrode terminal 7 is extended along the y-axis direction opposite to the positive electrode terminal 6 and drawn outside from the container member 2.

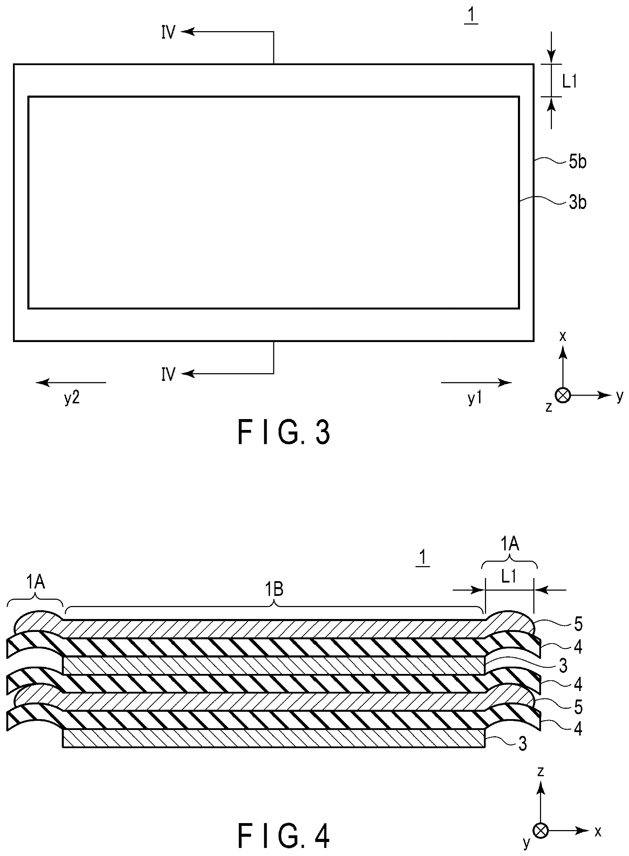

As illustrated in FIG. 2, in an extending direction (referred to as a first direction y1) parallel to the y axis of the positive electrode terminal 6, one side portion of the negative electrode active material-containing layer 5b on the first direction y1 side protrudes in the first direction from one side portion of the positive electrode active material-containing layer 3b on the first direction y1 side. As illustrated in FIG. 3, the remaining three side portions of the negative electrode active material-containing layer 5b, specifically, one side portion on the second direction y2 side opposite to the first direction and two side portions parallel to the x-axis direction protrude from the corresponding side portions of the positive electrode active material-containing layer 3b. Side portions of the separator (not illustrated) protrude from the four side portions of the negative electrode active material-containing layer 5b. In the plan view of the electrode group 1 illustrated in FIG. 3, the current collectors and collector tabs of the positive and negative electrodes, and the separators are omitted.

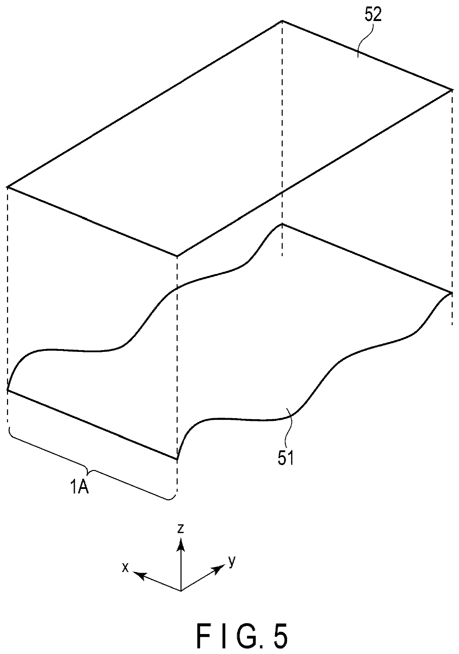

As illustrated in FIGS. 3 to 5, the two side portions 51 parallel to the y-axis direction of the negative electrode 5 have a wavy shape or an uneven shape in the electrode stacking direction (thickness direction or z-axis direction) of the electrode group 1. FIG. 5 is a schematic perspective view of one side portion of the two side portions 51 parallel to the y-axis direction of the negative electrode 5. Two side portions of the separator 4 in contact with these two side portions are deformed so as to follow a wavy shape or an uneven shape of the negative electrode 5.

As described above, in the electrode group 1, each of the four side portions of the negative electrode active material-containing layer 5b protrudes more than the corresponding four side portions of the positive electrode active material-containing layer 3b in the direction intersecting or substantially perpendicularly intersecting the electrode stacking direction (thickness direction or z-axis direction). The corresponding side portions of the separator 4 protrude from the four side portions of the negative electrode active material-containing layer 5b. A portion from arbitrary one side portion of the negative electrode 5 to a position away inward by a distance L1 is defined as an end portion 1A of the electrode group 1. In addition, a portion from each of the four side portions of the negative electrode 5 to a position away inward by the distance L1 is defined as an outer edge portion of the electrode group 1. The distance L1 can be set to 3 mm, for example. As illustrated in FIG. 5, the two side portions 51 parallel to the y-axis direction of the negative electrode 5 are wavy in a three-dimensional direction. Therefore, a projected area is used for a side portion of the negative electrode 5 defining the distance L1. This will be specifically described with reference to FIG. 5. A distance from a contour of a projected area 52 observed when the side portion 51 of the negative electrode 5 is viewed from the vertical direction (z-axis direction) is used as the distance L1. In the example of FIG. 5, the projected area 52 has a rectangular shape. Therefore, among the long side portions (two side portions in the y-axis direction) of the projected area 52, the long side portion corresponding to the outer edge of the side portion 51 of the negative electrode 5 is a start point of the distance L1. As for the interior portion 1B of the electrode group 1, as illustrated in FIG. 4, in a portion defined by two surfaces (outermost layers formed of the separators 4 in this example) intersecting the stacking direction of the electrode group 1, a portion surrounded by the outer edge portion is defined as the interior portion 1B of the electrode group 1. The interior portion 1B of the electrode group 1 is also referred to as flat portion.

The electrode group 1 satisfies the formula (1). $Ra 2 > Ra 1$ (1)

The end portion 1A of the electrode group 1 includes a side portion of the negative electrode 5 protruding from the positive electrode 3. The side portion of the negative electrode 5 protruding from the positive electrode 3 is less likely to be restrained by the positive electrode 3. Therefore, in the negative electrode 5, the use of an active material capable of causing a volume change by charging and discharging and the use of a current collector having ductility are likely to cause a deformation of the negative electrode 5 protruding from the positive electrode 3 by a charge/discharge reaction. By making the arithmetic average roughness Ra2 of the end portion 1A of the electrode group 1 larger than the arithmetic average roughness Ra1 of the interior portion 1B of the electrode group 1, the electrolyte retention of the end portion 1A of the electrode group 1 can be improved while ensuring flatness of the interior portion 1B of the electrode group 1. This can improve the life performance of the secondary battery.

In addition, when a battery module or a battery pack is configured using a plurality of secondary batteries, generation of an air gap between the batteries can be suppressed, so that heat trap between the batteries can be suppressed. Therefore, the thermal uniformity of the battery can be enhanced. As a result, the life performance of the battery module and the battery pack can be improved. In addition, since the loss of energy density due to the air gap between the batteries can be reduced, a battery module and a battery pack having a high energy density can be realized.

The electrode group desirably has a ratio (Ra2/Ra1) of 1.5 or more. The electrode group more desirably satisfies the following formula (2). $Ra 2 / Ra 1 \geq 3$ (2)

The electrode group satisfies the formula (2), whereby the life performance of the secondary battery, the battery module, and the battery pack can be further improved. An upper limit of the ratio (Ra2/Ra1) is desirably 7.5, and more preferably 5.0. A more preferable range of Ra2/Ra1 is 1.5 or more and 7.5 or less, and further 1.5 or more and 5.0 or less.

The arithmetic average roughness Ra2 desirably satisfies the following formula (3). $Ra 2 \geq {d}_{a}$ (3)

In the formula (3), the dₐ is a thickness of the negative electrode. A method for measuring the thickness dₐ of the negative electrode will be described. In a case where the negative electrode is incorporated in the battery, for example, the negative electrode is taken out from the battery as follows. First, the battery is discharged to 0.0 V to be in an over-discharged state. Next, the battery is disassembled in a glove box filled with argon to take out the negative electrode. The thickness of the negative electrode is measured with a film thickness meter.

The arithmetic average roughness Ra2 satisfies the formula (3), whereby the electrolyte retention at the end portion 1A of the electrode group 1 can be improved.

In a case where the container member 2 is made of a laminate film, it is desirable to satisfy the following formula (4). $R 2 cell > R 1 cell$ (4)

In the formula (4), the R2cell is an arithmetic average roughness of at least one end portion at a wide surface (or the widest surface) of the secondary battery, and the R1cell is an arithmetic average roughness of an interior portion at the wide surface (or the widest surface) of the secondary battery. Here, in the case of the secondary battery 100 illustrated in FIGS. 1 and 2, the wide surface (the widest surface) of the secondary battery corresponds to a bottom surface (xy plane) of the battery housing portion 2A of the container member 2 in a portion excluding the sealing portion 2B of the container member 2. In a case where the structure of the electrode group 1 is a stack-type structure, the arithmetic average roughness R2cell is desirably the arithmetic average roughness of four end portions at the bottom surface of the battery housing portion 2A of the container member 2. On the other hand, in a case where the structure of the electrode group 1 is a wound-type structure, the arithmetic average roughness R2cell is desirably the arithmetic average roughness of two end portions in the winding axis direction (y-axis direction) at the bottom surface of the battery housing portion 2A of the container member 2.

The interior portion at the wide surface (the widest surface) of the secondary battery is a portion surrounded by four end portions. In the case of the secondary battery illustrated in FIGS. 1 and 2, it is a portion surrounded by four end portions at the bottom surface of the battery housing portion 2A of the container member 2.

In a case where the container member 2 is made of a laminate film, the life performance of the secondary battery, the battery module, and the battery pack can be further improved by satisfying the formula (4). In order to further improve the life performance, in a case where the container member 2 is made of a laminate film, the ratio (R2cell/R1cell) is desirably 1.5 or more, and more desirably satisfies the following formula (5). An upper limit value of the ratio (R2cell/R1cell) is desirably 7.5, and more desirably 5.0. A more preferable range of R2cell/R1cell is 1.5 or more and 7.5 or less, and further 1.5 or more and 5.0 or less. $R 2 cell / R 1 cell \geq 3$ (5)

The arithmetic average roughness R1cell of the interior portion desirably satisfies the following formula (6). $R 1 cell \leq 0 . 02 {d}_{c}$ (6)

In the formula (6), the d_{c} is a thickness of the secondary battery. A method for measuring the thickness d_{c} of the secondary battery will be described. The secondary battery is discharged at 0.05 C or less up to a lower limit voltage of a nominal voltage range of the secondary battery, and the battery thickness at a point at which a state of charge (SOC) has reached 0 is measured. In a case where an in-plane thickness varies due to deformation of the container member or the like, the thinnest thickness is defined as the thickness of the battery. In the measurement, it is preferable to use a stylus-type thickness meter.

The arithmetic average roughness R1cell of the interior portion satisfies the formula (6), whereby the flatness of the wide surface (or the widest surface) of the container member 2 can be enhanced. As a result, the flatness of the secondary battery can be increased, so that the thermal uniformity of the secondary battery can be further improved. As a result, the life performance of the secondary battery, the battery module and the battery pack can be further improved.

In FIGS. 1 to 5, each of the four side portions of the negative electrode active material-containing layer 5b protrudes more than the corresponding four side portions of the positive electrode active material-containing layer 3b in the direction intersecting the electrode stacking direction, but the present invention is not limited to this structure. The protruding side portion may be only one side, two sides, or three sides. The positive electrode 3 may protrude instead of the negative electrode 5.

### <Method for Measuring Arithmetic Average Roughness>

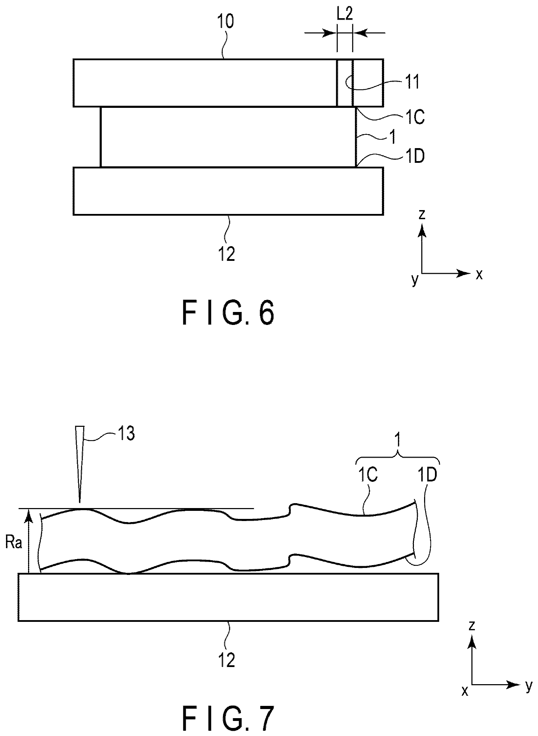

A method for measuring the arithmetic average roughness will be described with reference to FIGS. 6 to 8. In FIGS. 6 and 7, it is assumed that the electrode stacking direction (thickness direction) of the electrode group 1 is parallel to the z-axis direction. It is assumed that the extending direction of the positive and negative electrode terminals 6 and 7 is parallel to the y-axis direction. It is assumed that a direction substantially perpendicularly intersecting the extending direction of the positive and negative electrode terminals 6 and 7 is parallel to the x-axis direction.

A method for measuring the arithmetic average roughness Ra2 of the end portion 1A of the electrode group 1 will be described.

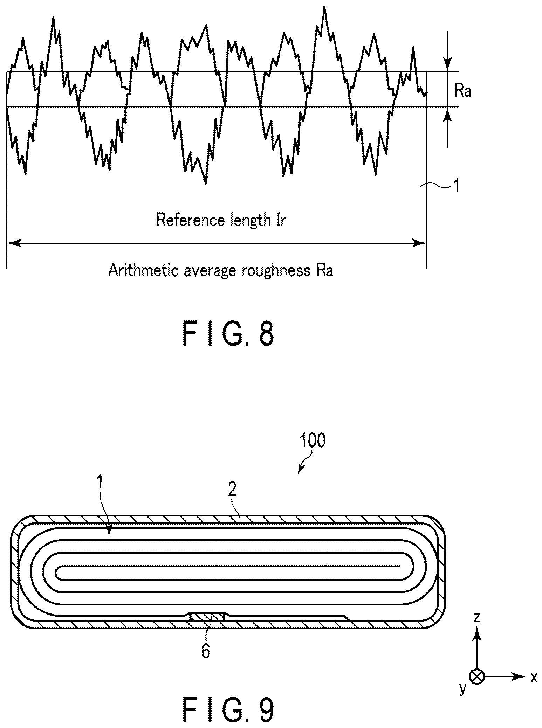

First, the electrode group 1 is taken out from the secondary battery 100. At this time, only the battery container member is incised to isolate the electrode group, so as to avoid electrode damage at the side portion and not to affect the thickness of the electrode group. Two parallel flat plates 10 and 12 are used as measurement jigs. Of two surfaces intersecting the electrode stacking direction (z-axis direction) of the electrode group 1, the upper flat plate 10 is disposed on one surface 1C, and the lower flat plate 12 is disposed on the other surface 1D. The upper flat plate 10 is provided with a slit 11 that penetrates in a flat plate thickness direction (z-axis direction) and is parallel to a flat plate long side direction (y-axis direction) at a position corresponding to a range from the side portion (contour) of the surface 1C of the electrode group 1 to a distance L2. The distance L2 can be set to 1 mm, for example. Here, the side portion (contour) of the surface 1C of the electrode group 1 is determined from the contour defining the projected area (excluding the separator) observed when the surface 1C is viewed from the vertical direction. In order to prevent deformation of the electrode group 1, the electrode group 1 is sandwiched and restrained by the upper flat plate 10 and the lower flat plate 12 at a pressure of 10 kPa or less. In this state, when a stylus 13 of the stylus-type thickness meter is inserted into the slit 11 and brought into contact with the surface 1C of the electrode group 1, the height from the lower flat plate 12 at that position is measured as the surface roughness Ra. By moving the stylus 13 in the slit 11 along the y-axis direction, the surface roughness Ra of one side portion parallel to the y-axis direction of the electrode group 1 is measured. The arithmetic average roughness Ra is obtained with the length of one side portion as a reference length Ir. FIG. 8 is a view schematically illustrating a relationship among the surface roughness Ra, the arithmetic average roughness Ra, and the reference length Ir.

The reference length Ir is varied according to the length of an object to be measured for the surface roughness Ra. For example, in a case where the surface roughness Ra of two sides of the electrode group 1 is measured, the total length of the two sides is set as the reference length Ir.

Next, a method for measuring the arithmetic average roughness Ra1 of the interior portion 1B of the electrode group 1 will be described.

In the surface 1C or 1D of the electrode group 1, a portion from the four side portions to the inside by 3 mm is defined as outer edge portion. A portion surrounded by the outer edge portion is defined as interior portion (also referred to as flat portion). The four side portions of each of the surfaces 1C and 1D form a contour that defines the projected area (excluding the separator) observed when each surface is viewed from the vertical direction. Another measurement jig having the same structure as the parallel flat plates 10 and 12 is prepared except that the positions of the slits 11 of the parallel flat plates 10 and 12 described with reference to FIG. 5 are changed so that the interior portion of the electrode group 1 is exposed. The electrode group 1 is sandwiched and restrained between an upper flat plate and a lower flat plate of another measurement jig at a pressure of 10 kPa or less. The interior portion of the surface 1C of the electrode group 1 is located in the slit of the upper flat plate. The interior portion (flat portion) is divided into 200 equal parts, and the stylus 13 of the stylus-type thickness meter is brought into contact with a diagonal center of each section to obtain the surface roughness Ra. An average of the obtained surface roughnesses Ra is defined as the arithmetic average roughness Ra1.

Instead of the electrode group 1, the secondary battery 100 is used as the object to be measured for the arithmetic average roughness R2cell of at least one end portion at the wide surface (or the widest surface) of the secondary battery and the arithmetic average roughness R1cell of the interior portion at the wide surface (or the widest surface) of the secondary battery. A method for determining the contour of the widest surface is similar to that described for the electrode group 1. In addition, a method for measuring the arithmetic average roughness of each of the end portion and the interior portion at the widest surface is similar to that described for the electrode group 1.

### <End Portion and Interior portion of Wound-Type Electrode Group>

In FIGS. 1 to 8, the stack-type electrode group has been described as an example, but the secondary battery of the approach is not limited to the stack-type electrode group, and can be applied to a wound-type electrode group. Examples of a secondary battery including a wound-type electrode group are illustrated in FIGS. 9 to 13.

A secondary battery 100 illustrated in FIG. 9 includes a bag-shaped container member 2, an electrode group 1, and an electrolyte (not illustrated). The electrode group 1 and the electrolyte are housed in the bag-shaped container member 2. The electrolyte (not illustrated) is held in the electrode group 1. It is assumed that a thickness direction (electrode stacking direction) of the secondary battery 100 is parallel to the z-axis direction. It is assumed that a winding axis direction of the electrode group is parallel to the y-axis direction. It is assumed that a direction substantially perpendicularly intersecting the winding axis direction is parallel to the x-axis direction.

The bag-shaped container member 2 is made of a laminate film including two resin layers and a metal layer interposed between the resin layers. A thermoplastic resin layer is provided on an inner surface of the bag-shaped container member 2, and an opening is closed by thermally fusing the thermoplastic resin layer.

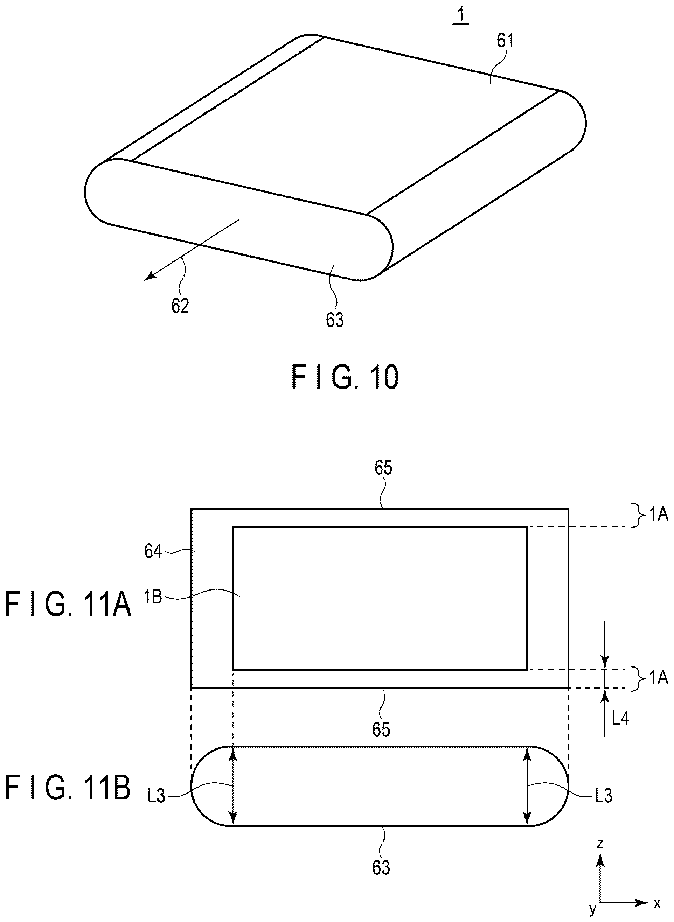

As illustrated in FIG. 10, the electrode group 1 is a wound-type electrode group in a flat form. The wound-type electrode group 1 in a flat form includes a positive electrode 3, a separator 4, and a negative electrode 5. The separator 4 is sandwiched between the positive electrode 3 and the negative electrode 5. In FIG. 10, for convenience, illustration of the positive electrode 3, the separator 4, the negative electrode 5, and the positive and negative electrode terminals 6 and 7 is omitted. The end portion 1A and the interior portion (flat portion) 1B of the wound-type electrode group 1 will be described. The widest surface in the wound-type electrode group 1 exemplified in FIG. 10 corresponds to a flat surface 61 intersecting the thickness direction (z-axis direction). The wound-type electrode group 1 has end surfaces 63 on both sides in a winding axis direction 62 (y-axis direction). Each end surface 63 has a flat spiral shape. The definition of the outer edge of the widest surface will be described. A contour of a projected area 64 (excluding the separator and the positive and negative electrode collector tabs) observed when the widest surface is viewed from the vertical direction as illustrated in FIG. 11A is defined as the outer edge of the widest surface. In the contour of the projected area 64, a range from each of two side portions 65 parallel to the x-axis direction (intersecting the winding axis direction 62) to a distance L4 is the end portion 1A of the wound-type electrode group 1. The distance L4 is desirably 3 mm.

As illustrated in FIGS. 11A and 11B, the interior portion (flat portion) 1B of the wound-type electrode group 1 is a region excluding both end portions 1A in a portion corresponding to a turn diameter L3 in the projected area 64. The turn diameter L3 corresponds to the thickness of the wound-type electrode group 1. A method for measuring the thickness of the wound-type electrode group will be described. In a case where the wound-type electrode group is incorporated in the battery, for example, the electrode group is taken out from the battery as follows. First, the battery is discharged to 0.0 V to be in a completely discharged state. Next, the battery is disassembled in a glove box filled with argon to take out the electrode group. The thickness of the electrode group is measured with a stylus-type thickness meter. In a case where an in-plane thickness varies due to deformation of the container member or the like, the thinnest point is defined as the thickness of the battery.

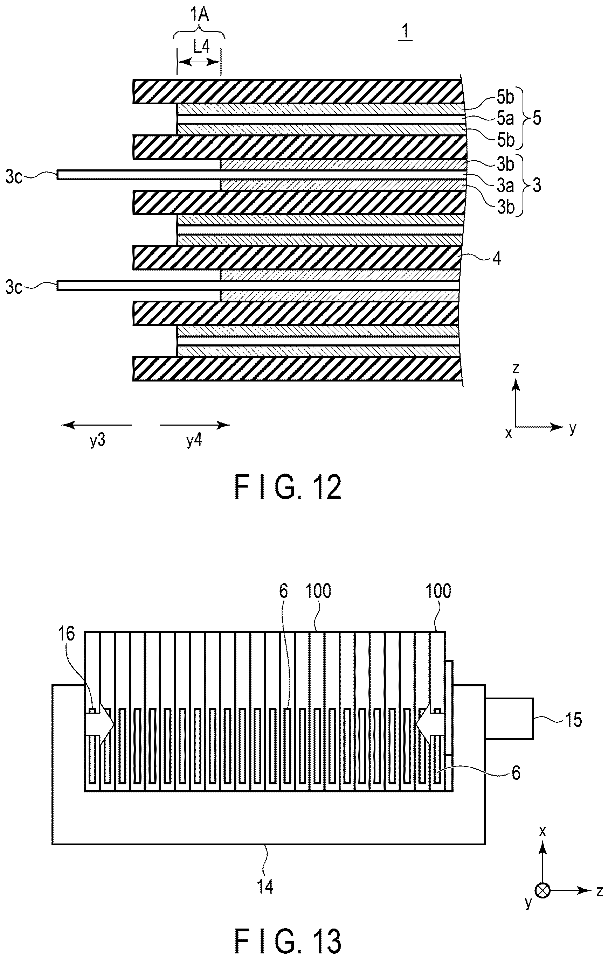

FIG. 12 is a cross-sectional view of a vicinity of one end surface (spiral surface) of the electrode group 1 illustrated in FIG. 10 taken along the y-axis direction. In FIG. 12, positive and negative electrode terminals 6 and 7 are not illustrated for convenience. As illustrated in FIG. 12, the positive electrode 3 includes a positive electrode current collector 3a and positive electrode active material-containing layers 3b supported on both sides of the positive electrode current collector 3a. The positive electrode current collector 3a of the positive electrode 3 includes a portion where the positive electrode active material-containing layer 3b is not supported on either surface in both long side portions (side portions in a direction intersecting the y-axis direction). This portion serves as a positive electrode collector tab 3c.

The negative electrode 5 includes a negative electrode current collector 5a and negative electrode active material-containing layers 5b supported on both sides of the negative electrode current collector 5a. The negative electrode current collector 5a of the negative electrode 5 includes a portion where the negative electrode active material-containing layer 5b is not supported on either surface in both long side portions (side portions in a direction intersecting the y-axis direction). This portion serves as a negative electrode collector tab 5c.

As illustrated in FIG. 12, in the electrode group 1, at one end portion in the winding axis direction (y-axis direction), the positive electrode collector tab 3c protrudes in the y-axis direction (referred to as third direction y3) in a state of being wound in a flat spiral shape. Although not illustrated, at the other end portion in the winding axis direction (y-axis direction), the negative electrode collector tab 5c (not illustrated) protrudes in the y-axis direction (referred to as fourth direction y4) opposite to the first direction in a state of being wound in a flat spiral shape. The positive electrode collector tab 3c is electrically connected to a belt-shaped positive electrode terminal 6. On the other hand, the negative electrode collector tab 5c is electrically connected to a belt-shaped negative electrode terminal (not illustrated). A tip of the belt-shaped positive electrode terminal 6 illustrated in FIG. 9 is extended along the third direction y3 and drawn outside from the container member 2.

As illustrated in FIG. 12, at one end portion of the electrode group 1 in the winding axis direction (third direction y3), the separator 4, the negative electrode active material-containing layer 5b, and the positive electrode active material-containing layer 3b are located inside the positive electrode collector tab 3c in this order. Although not illustrated, at the other end portion of the electrode group 1 in the winding axis direction (fourth direction y4), the separator 4, the negative electrode active material-containing layer 5b, and the positive electrode active material-containing layer 3b are located inside the negative electrode collector tab 5c in this order. The separator 4, the negative electrode 5, and the positive electrode 3 are all wound in a flat spiral shape. At both end portions in the winding axis direction (y-axis direction) of the electrode group 1, each long side portion of the negative electrode active material-containing layer 5b protrudes more than each long side portion of the corresponding positive electrode active material-containing layer 3b. Therefore, the contour of the projected area of the negative electrode active material-containing layer 5b is located in the contour of the projected area 64.

Even in the secondary battery including the wound-type electrode group 1, the life performance can be improved due to the electrode group 1 satisfying the formula (1). The arithmetic average roughness Ra2 of the end portion 1A and the arithmetic average roughness Ra1 of the interior portion (flat portion) 1B of the wound-type electrode group 1 can be measured by the method described above.

Examples of the secondary battery include a lithium secondary battery, a sodium secondary battery, and a nonaqueous electrolyte secondary battery including a nonaqueous electrolyte.

Hereinafter, the negative electrode, positive electrode, electrolyte, separator, container member, negative electrode terminal, and positive electrode terminal will be described in detail.

### 1) Negative Electrode

The negative electrode may include a negative electrode current collector and a negative electrode active material-containing layer. The negative electrode active material-containing layer can be formed on one side or both sides of the negative electrode current collector. The negative electrode active material-containing layer contains a negative electrode active material. The negative electrode active material-containing layer may contain a conductive agent and a binder as optional components.

The negative electrode current collector has, for example, a plate shape, a foil shape, or a sheet shape. The negative electrode current collector may have a porous structure. The negative electrode current collector is preferably made of copper, a copper alloy, nickel, stainless steel or aluminum, or an aluminum alloy. The aluminum alloy preferably contains one or more elements selected from Mg, Ti, Zn, Mn, Fe, Cu, and Si. The material constituting the negative electrode current collector can be one type or two or more types.

A thickness of the current collector is preferably 5 µm or more and 20 µm or less. The current collector having such a thickness can achieve a balance between strength and weight reduction of the electrode.

Further, the negative electrode current collector may include a portion where the negative electrode active material-containing layer is not formed on the surface thereof. This portion can serve as a negative electrode collector tab.

Examples of the negative electrode active material include metals, non-metals, alloys, oxides, sulfides, phosphides, acid sulfides, phosphoric acid, sulfuric acid compounds, and carbon materials. The type of the negative electrode active material may be one or two or more.

Examples of the metal include lithium metal.

Examples of the non-metal include silicon.

Examples of the alloy include an Sn alloy and a Zn-containing alloy.

As an example of the oxide, an oxide containing at least one selected from the group consisting of titanium, niobium, tungsten, molybdenum, vanadium, iron, tin, and silicon can be contained. Specific examples thereof include niobium-containing oxides, titanium dioxide (TiO₂), Fe₂O₃, Li/NaₓTi/Nb_{y}O_{z}, and silicon oxide. The niobium-containing oxide includes niobium pentoxide (Nb₂O₅), Nb₁₂O₂₉, FeNb₁₁O₂₉, monoclinic niobium-titanium oxide (TNO), tetragonal titanium-niobium-tungsten composite oxide, and tetragonal titanium-niobium-molybdenum composite oxide.

Examples of the sulfide include FeS, CoS, and MoS₂.

Examples of the carbon material include hard carbon and graphite.

An example of the monoclinic niobium-titanium oxide is a compound represented by LiₓTi_{1-y}M1_{y}Nb_{2-z}M2_{z}O_{7+δ}. Here, M1 is at least one selected from the group consisting of Zr, Si, and Sn. M2 is at least one selected from the group consisting of V, Ta, and Bi. The respective subscripts in the composition formula are as follows: 0 ≤ x ≤ 5, 0 ≤ y < 1, 0 ≤ z < 2, and -0.3 ≤ δ ≤ 0.3. A specific example of the monoclinic niobium-titanium oxide is LiₓNb₂TiO₇ (0 ≤ x ≤ 5).

Another example of the monoclinic niobium-titanium oxide is a compound represented by LiₓTi_{1-y}M3_{y+z}Nb_{2-z}O_{7-δ}. Here, M3 is at least one selected from Mg, Fe, Ni, Co, W, Ta, and Mo. The respective subscripts in the composition formula are as follows: 0 ≤ x ≤ 5, 0 ≤ y < 1, 0 ≤ z < 2, and -0.3 ≤ δ ≤ 0.3.

Examples of other oxides include lithium titanate having a ramsdellite structure (e.g., Li_{2+y}Ti₃O₇, 0 ≤ y ≤ 3) and lithium titanate having a spinel structure (e.g., Li₄₊ₓTi₅O₁₂, 0 ≤ x ≤ 3), titanium dioxide (TiO₂), anatase type titanium dioxide, rutile type titanium dioxide, hollandite type titanium composite oxide, and orthorhombic titanium composite oxide.

Examples of the orthorhombic titanium-containing composite oxide as described above include a compound represented by Li₂₊ₐM^{I}_{2-b}Ti_{6-c}M^{II}_{d}O_{14+σ}. Here, M^{I} is at least one selected from the group consisting of Sr, Ba, Ca, Mg, Na, Cs, Rb and K. M^{II} is at least one selected from the group consisting of Zr, Sn, V, Nb, Ta, Mo, W, Y, Fe, Co, Cr, Mn, Ni and Al. The respective subscripts in the composition formula are as follows: 0 ≤ a ≤ 6, 0 ≤ b < 2, 0 ≤ c < 6, 0 ≤ d < 6, and -0.5 ≤ σ ≤ 0.5. A specific example of the orthorhombic titanium-containing composite oxide is Li₂₊ₐNa₂Ti₆O₁₄ (0 ≤ a ≤ 6).

Desirable as the negative electrode active material is a first negative electrode active material containing at least one selected from the group consisting of niobium-containing oxide, hard carbon, and graphite. In a case where the first negative electrode active material is used, the negative electrode current collector is desirably a first negative electrode current collector containing at least one of aluminum or an aluminum alloy. The first negative electrode active material can expand and contract by charging and discharging. The first negative electrode current collector has ductility. If at least one side portion of the negative electrode including the first negative electrode active material and the first negative electrode current collector protrudes from the positive electrode, the negative electrode is likely to be deformed by a volume change due to a charge-discharge reaction. Therefore, the relationship of the arithmetic average roughness satisfies the range defined in the present approach, whereby the life performance can be reliably improved.

In addition, a second negative electrode active material containing at least one selected from the group consisting of a metal, a non-metal, and an alloy is desirable as the negative electrode active material. In a case where the second negative electrode active material is used, the negative electrode current collector is desirably a second negative electrode current collector containing at least one of copper or a copper alloy. The second negative electrode active material more remarkably expands and contracts by charging and discharging than the first negative electrode active material. If at least one side portion of the negative electrode including the second negative electrode active material and the second negative electrode current collector protrudes from the positive electrode, the negative electrode is likely to be deformed by a volume change due to a charge-discharge reaction. Therefore, the relationship of the arithmetic average roughness satisfies the formula (1), whereby the life performance can be reliably improved. A content of the second negative electrode active material in the negative electrode active material is desirably 20 wt% or more.

The binder can fill gaps in the dispersed active material. In addition, it is possible to bind the active material and the current collector. Examples of the binder include polytetrafluoroethylene (PTFE), polyvinylidene fluoride (PVdF), fluorine rubber, styrene-butadiene rubber, polyacrylic acid compounds, imide compounds, carboxymethyl cellulose (CMC), and salts of CMC. One of these may be used as the binder, or alternatively, two or more may be used in combination as the binder.

The conductive agent can enhance current collection performance. In addition, it is possible to suppress contact resistance between the active material and the current collector. Examples of the conductive agent include carbonaceous materials such as vapor grown carbon fiber (VGCF), carbon blacks such as acetylene black, graphite, carbon nanotubes, and carbon nanofibers. One of these may be used as the conductive agent, or two or more may be used in combination as the conductive agent. Alternatively, instead of using the conductive agent, a carbon coat or an electronically conductive inorganic material coat may be applied to surfaces of the active material particles.

A density of the negative electrode active material-containing layer (excluding the current collector) is preferably from 1.4 g/cm³ or more and 2.8 g/cm³ or less. A negative electrode including the negative electrode active material-containing layer having a density within this range is excellent in energy density and electrolyte retention. The density of the negative electrode active material-containing layer is more preferably 2.1 g/cm³ or more and 2.6 g/cm³ or less.

Blending proportions of the active material, conductive agent and binder in the active material-containing layer may be appropriately changed according to the use of the electrode. For example, it is preferable to blend the active material, the conductive agent and the binder in proportions of 68 mass% or more and 96 mass% or less, 2 mass% or more and 30 mass% or less, and 2 mass% or more and 30 mass% or less, respectively.

The negative electrode can be produced, for example, by the following method. First, a negative electrode active material, a conductive agent, and a binder are suspended in a solvent to prepare a slurry. The slurry is applied onto one side or both sides of a current collector. The solvent is not limited to water, and may be, for example, another water-soluble solvent or an organic solvent. Then, the applied slurry is dried to obtain a stack of a negative electrode active material-containing layer and the current collector. Then, the stack is subjected to pressing. The negative electrode is produced in this manner.

Alternatively, the negative electrode may be produced by the following method. First, a negative electrode active material, a conductive agent, and a binder are mixed to obtain a mixture. Next, the mixture is formed into pellets. Then, the negative electrode can be obtained by disposing the pellets onto the current collector.

### 2) Positive Electrode

The positive electrode may include a positive electrode current collector and a positive electrode active material-containing layer. The positive electrode active material-containing layer may be formed on one side or both sides of the positive electrode current collector. The positive electrode active material-containing layer can include a positive electrode active material, and optionally a conductive agent and a binder.

As the positive electrode active material, for example, an oxide or a sulfide can be used. The positive electrode may include one type of compound singly as the positive electrode active material, or, alternatively, may include two or more types of compounds in combination. Examples of the oxide and sulfide include compounds capable of allowing an alkali metal or alkali metal ions to be inserted and extracted.

Examples of such compounds include manganese dioxide (MnO₂), iron oxides, copper oxides, nickel oxides, lithium manganese composite oxides (e.g., LiₓMn₂O₄ or LiₓMnO₂; 0 < x ≤ 1), lithium nickel composite oxides (e.g., LiₓNiO₂; 0 < x ≤ 1), lithium cobalt composite oxides (e.g., LiₓCoO₂; 0 < x ≤ 1), lithium nickel cobalt composite oxides (e.g., LiₓNi_{1-y}Co_{y}O₂; 0 < x ≤ 1, 0 < y < 1), lithium manganese cobalt composite oxides (e.g., LiₓMn_{y}Co_{1-y}O₂; 0 < x ≤ 1, 0 < y < 1), lithium manganese nickel composite oxides having a spinel structure (e.g., LiₓMn_{2-y}Ni_{y}O₄; 0 < x ≤ 1, 0 < y < 2), iron sulfate (Fe₂(SO₄)₃), vanadium oxides (e.g., V₂O₅), lithium nickel cobalt manganese composite oxides (LiₓNi_{1-y-z}Co_{y}Mn_{z}O₂; 0 < x ≤ 1, 0 < y < 1, 0 < z < 1, y+z < 1), sodium transition metal oxides, sodium transition metal phosphate compounds, and Prussian blue analogous complexes.

Examples of the sodium transition metal oxide include NaₙM^{I}ₓM^{II}_{y}M^{III}_{z}O₂ (where M^{I}, M^{II}, and M^{III} may be the same as or different from each other, and are each at least one element selected from the group consisting of Ni, Co, Mn, Fe, Cu, Al, and Zn, and are not necessarily limited to three; and n, x, y, and z are 0.5 ≤ n ≤ 1.2, 0 ≤ x ≤ 1, 0 ≤ y ≤ 1, 0 ≤ z ≤ 1, and x + y + z = 1). Specific examples thereof include NaNi_{0.33}Fe_{0.33}Mn_{0.33}O₂ and NaNi_{0.2}Fe_{0.33}Mn_{0.33}Cu_{0.13}O₂.

Examples of the sodium transition metal phosphate compound include NaₙMₓ(P_{y}O_{z}) (where M is at least one element selected from the group consisting of Ni, Co, Mn, and Fe. Phosphorus may be partially substituted with Si, S, B, Ge, or the like. Specific examples thereof include Na₄Fe₃(PO₄)₂P₂O₇, Na₃Fe₂(PO₄)₃, and NaFePO₄.

Examples of the Prussian blue analogous complex include NaₙM^{I}ₓM^{II}_{y}(CN)₆) (where M^{I} and M^{II} may be the same as or different from each other, and each represent at least one element selected from the group consisting of Ni, Co, Mn, and Fe; and n, x, and y are 1 ≤ n ≤ 3, 0 ≤ x ≤ 1, 0 ≤ y ≤ 1, and x + y = 2).

Among the above, examples of compounds more preferable as the positive electrode active material include lithium manganese composite oxides having a spinel structure (e.g., LiₓMn₂O₄; 0 < x ≤ 1), lithium nickel composite oxides (e.g., LiₓNiO₂; 0 < x ≤ 1), lithium cobalt composite oxides (e.g., LiₓCoO₂; 0 < x ≤ 1), lithium nickel cobalt composite oxides (e.g., LiₓNi_{1-y}Co_{y}O₂; 0 < x ≤ 1, 0 < y < 1), lithium manganese nickel composite oxides having a spinel structure (e.g., LiₓMn_{2-y}Ni_{y}O₄; 0 < x ≤ 1, 0 < y < 2), lithium manganese cobalt composite oxide (e.g., LiₓMn_{y}Co_{1-y}O₂; 0 < x ≤ 1, 0 < y < 1), lithium iron phosphates (e.g., LiₓFePO₄; 0 < x ≤ 1), and lithium nickel cobalt manganese composite oxides (LiₓNi_{1-y-z}Co_{y}Mn_{z}O₂; 0 < x ≤ 1, 0 < y < 1, 0 < z < 1, y+z < 1). The positive electrode potential can be made high by using these compounds as the positive electrode active material.

In a case where a room temperature molten salt is used as the electrolyte of the battery, it is preferable to use a positive electrode active material including lithium iron phosphate, LiₓVPO₄F (0 ≤ x ≤ 1), lithium manganese composite oxide, lithium nickel composite oxide, lithium nickel cobalt composite oxide, or a mixture thereof. Since these compounds have low reactivity with room temperature molten salts, cycle life can be improved. Details of the room temperature molten salt will be described later.

A primary particle size of the positive electrode active material is preferably 100 nm or more and 1 µm or less. A positive electrode active material having a primary particle size of 100 nm or more is easy to handle during industrial production. In a positive electrode active material having a primary particle size of 1 µm or less, in-solid diffusion of alkali metal ions (for example, lithium ions) can proceed smoothly.

A specific surface area of the positive electrode active material is preferably 0.1 m²/g or more and 10 m²/g or less. A positive electrode active material having a specific surface area of 0.1 m²/g or more can sufficiently secure sites for inserting and extracting alkali metal ions such as lithium ions. A positive electrode active material having a specific surface area of 10 m²/g or less is easy to handle during industrial production, and can secure a good charge and discharge cycle performance.

The binder is blended to fill gaps among the dispersed positive electrode active material and also to bind the positive electrode active material with the positive electrode current collector. Examples of the binder include polytetrafluoro ethylene (PTFE), polyvinylidene fluoride (PVdF), fluororubber, polyacrylic acid compounds, imide compounds, carboxymethyl cellulose (CMC), and salts of CMC. One of these may be used as the binder, or alternatively, two or more may be used in combination as the binder.

The positive electrode current collector may be, for example, a current collecting foil. The current collecting foil may have a through hole. The positive electrode current collector is preferably an aluminum foil, or an aluminum alloy foil including one or more selected from the group consisting of Mg, Ti, Zn, Ni, Cr, Mn, Fe, Cu, and Si.

A thickness of the aluminum foil or aluminum alloy foil is preferably 5 µm or more and 20 µm or less, and more preferably 15 µm or less. A purity of the aluminum foil is preferably 99 mass% or more. Contents of transition metals such as iron, copper, nickel, and chromium included in the aluminum foil or aluminum alloy foil are preferably 1 mass% or less.

The positive electrode current collector may include a portion where the positive electrode active material-containing layer is not formed, on a surface thereof. This portion can serve as a positive electrode collector tab.

The conductive agent is blended to enhance current collection performance and to suppress contact resistance between the active material and the current collector. Examples of the conductive agent include carbonaceous materials such as vapor grown carbon fiber (VGCF), carbon blacks such as acetylene black, graphite, carbon nanotubes, and carbon nanofibers. One of these may be used as the conductive agent, or two or more may be used in combination as the conductive agent. Alternatively, instead of using the conductive agent, a carbon coat or an electronically conductive inorganic material coat may be applied to surfaces of the active material particles. The conductive agent may be omitted in the approach of the positive electrode.

As the binder, a water-soluble binder may be used. The water-soluble binder can be cellulose-based members such as carboxymethyl cellulose (CMC) sodium, fluororubber, or styrene-butadiene rubber, but is not limited thereto.

Blending proportions of the active material, conductive agent and binder in the active material-containing layer may be appropriately changed according to the use of the electrode. For example, it is preferable to blend the active material, the conductive agent and the binder in proportions of 68 mass% or more and 96 mass% or less, 2 mass% or more and 30 mass% or less, and 2 mass% or more and 30 mass% or less, respectively.

The positive electrode can be produced, for example, by the following method. First, a positive electrode active material, a conductive agent, and a binder are suspended in a solvent to prepare a slurry. The slurry is applied onto one side or both sides of a current collector. The solvent is not limited to water, and may be, for example, another water-soluble solvent or an organic solvent. Then, the applied slurry is dried to obtain a stack of a positive electrode active material-containing layer and the current collector. Then, the stack is subjected to pressing. The positive electrode is produced in this manner.

Alternatively, the positive electrode may be produced by the following method. First, a positive electrode active material, a conductive agent, and a binder are mixed to obtain a mixture. Next, the mixture is formed into pellets. The positive electrode can then be obtained by disposing these pellets on the current collector.

### 3) Electrolyte

As the electrolyte, for example, a liquid nonaqueous electrolyte or gel nonaqueous electrolyte can be used. The liquid nonaqueous electrolyte is prepared by dissolving an electrolyte salt as a solute in an organic solvent. A concentration of the electrolyte salt is preferably 0.5 mol/L or more and 2.5 mol/L or less.

Examples of the electrolyte salt include lithium salts such as lithium perchlorate (LiClO₄), lithium hexafluorophosphate (LiPF₆), lithium tetrafluoroborate (LiBF₄), lithium hexafluoroarsenate (LiAsF₆), lithium trifluoromethanesulfonate (LiCF₃SO₃), and lithium bistrifluoromethylsulfonylimide (LiN(CF₃SO₂)₂), and mixtures thereof. The electrolyte salt is preferably hard to oxidize even at a high potential, and is most preferably LiPF₆.

In addition, when Na or Na ions is/are inserted into and extracted from the active material, examples of the electrolyte salt include sodium salts such as sodium perchlorate (NaClO₄), sodium hexafluorophosphate (NaPF₆), sodium tetrafluoroborate (NaBF₄), sodium arsenic hexafluoride (NaAsF₆), sodium trifluoromethanesulfonate (NaCF₃SO₃), and sodium bistrifluoromethylsulfonylimide (NaN(CF₃SO₂)₂), and mixtures thereof.

Examples of the organic solvent include cyclic carbonates such as propylene carbonate (PC), ethylene carbonate (EC), and vinylene carbonate (VC); linear carbonates such as diethyl carbonate (DEC), dimethyl carbonate (DMC), and methyl ethyl carbonate (MEC); cyclic ethers such as tetrahydrofuran (THF), 2-methyl tetrahydrofuran (2-MeTHF), and dioxolane (DOX); linear ethers such as dimethoxy ethane (DME), diethoxy ethane (DEE), and diethylene glycol dimethyl ether (diglyme; G2); γ-butyrolactone (GBL), acetonitrile (AN), and sulfolane (SL). These organic solvents may be used singly or as a mixed solvent.

The gel nonaqueous electrolyte is prepared by obtaining a composite of a liquid nonaqueous electrolyte and a polymeric material. Examples of the polymeric material include polyvinylidene fluoride (PVdF), polyacrylonitrile (PAN), polyethylene oxide (PEO), and mixtures thereof.

Alternatively, other than the liquid nonaqueous electrolyte and gel nonaqueous electrolyte, a room temperature molten salt (ionic melt) containing lithium ions or sodium ions, a polymeric solid electrolyte, an inorganic solid electrolyte, or the like may be used as the nonaqueous electrolyte.

The room temperature molten salt (ionic melt) refers to a compound among organic salts made of combinations of organic cations and anions, which is able to exist in a liquid state at a room temperature (15°C or higher and 25°C or lower). The room temperature molten salt includes a room temperature molten salt which exists alone as a liquid, a room temperature molten salt which becomes a liquid upon mixing with an electrolyte salt, a room temperature molten salt which becomes a liquid upon dissolution in an organic solvent, and mixtures thereof. In general, a melting point of the room temperature molten salt used in a secondary battery is 25°C or lower. The organic cations generally have a quaternary ammonium skeleton.

The polymeric solid electrolyte is prepared by dissolving an electrolyte salt in a polymeric material, and solidifying it.

Examples of the inorganic solid electrolyte include a solid substance having lithium ion conductivity and a solid substance having sodium ion conductivity. Having lithium ion conductivity, as referred to herein, indicates exhibiting a lithium ion conductivity of 1×10⁻⁶ S/cm or more at 25°C. Examples of the inorganic solid electrolyte include oxide solid electrolytes and sulfide solid electrolytes. Specific examples of the inorganic solid electrolyte will be described below.

Preferably used as the oxide solid electrolyte is a lithium phosphate solid electrolyte having a sodium (Na) super ionic conductor (NASICON) structure and represented by a general formula Li₁₊ₓMα₂(PO₄)₃. Mα in the above general formula is, for example, one or more selected from the group consisting of titanium (Ti), germanium (Ge), strontium (Sr), zirconium (Zr), tin (Sn), aluminum (Al), and calcium (Ca). The subscript x is in a range of 0 ≤ x ≤ 2.

Specific examples of the lithium phosphate solid electrolyte having the NASICON structure include a LATP compound represented by Li₁₊ₓAlₓTi₂₋ₓ(PO₄)₃ where 0.1 ≤ x ≤ 0.5; a compound represented by Li₁₊ₓAl_{y}Mβ_{2-y}(PO₄)₃ where Mβ is one or more selected from the group consisting of Ti, Ge, Sr, Zr, Sn, and Ca, 0 ≤ x ≤ 1, and 0 ≤ y ≤ 1; a compound represented by Li₁₊ₓAlₓGe₂₋ₓ(PO₄)₃ where 0 ≤ x ≤ 2; a compound represented by Li₁₊ₓAlₓZr₂₋ₓ(PO₄)₃ where 0 ≤ x ≤ 2; a compound represented by Li_{1+x+y}AlₓMγ₂₋ₓSi_{y}P_{3-y}O₁₂ where Mγ is one or more selected from the group consisting of Ti and Ge, 0 < x ≤ 2, and 0 ≤ y < 3; and a compound represented by Li₁₊₂ₓZr₁₋ₓCaₓ(PO₄)₃ where 0 ≤ x < 1.

In addition to the above lithium phosphate solid electrolyte, examples of the oxide solid electrolyte include amorphous LIPON compounds represented by LiₓPO_{y}N_{z} where 2.6 ≤ x ≤ 3.5, 1.9 ≤ y ≤ 3.8, and 0.1 ≤ z ≤ 1.3 (e.g., Li_{2.9}PO_{3.3}N_{0.46}); a compound having a garnet structure represented by La₅₊ₓAₓLa₃₋ₓMδ₂O₁₂ where A is one or more selected from the group consisting of Ca, Sr, and Ba, Mδ is one or more selected from the group consisting of Nb and Ta, and 0 ≤ x ≤ 0.5; a compound represented by Li₃Mδ₂₋ₓL₂O₁₂ where Mδ is one or more selected from the group consisting of Nb and Ta, L may include Zr, and 0 ≤ x ≤ 0.5; a compound represented by Li₇₋₃ₓAlₓLa₃Zr₃O₁₂ where 0 ≤ x ≤ 0.5; a LLZ compound represented by Li₅₊ₓLa₃Mδ₂₋ₓZrₓO₁₂ where Mδ is one or more selected from the group consisting of Nb and Ta, and 0 ≤ x ≤ 2 (e.g., Li₇La₃Zr₂O₁₂); and a compound having a perovskite structure and represented by La_{2/3-x}LiₓTiO₃ where 0.3 ≤ x ≤ 0.7.

One or more among the above compounds may be used as the solid electrolyte. Two or more of the above solid electrolytes may be used. In addition, a compound in which Li contained in the compound is substituted with Na can be used as a solid substance having sodium ion conductivity.

### 4) Separator

The separator may be made of, for example, a porous film or synthetic resin nonwoven fabric including polyethylene (PE), polypropylene (PP), cellulose, or polyvinylidene fluoride (PVdF). In view of safety, a porous film made of polyethylene or polypropylene is preferred. This is because, at a certain temperature, such a porous film melts and can shut off current.

The separator may be composed only of a material disposed between the positive electrode and the negative electrode, or may include a portion covering only one of the positive electrode or the negative electrode.

### 5) Container Member

As the container member, for example, a container made of a laminate film or a container made of a metal may be used.

A thickness of the laminate film is, for example, 0.5 mm or less, and preferably 0.2 mm or less.

As the laminate film, used is a multilayer film including a plurality of resin layers and a metal layer sandwiched between the respective resin layers. The resin layer may include, for example, a polymeric material such as polypropylene (PP), polyethylene (PE), nylon, or polyethylene terephthalate (PET). The metal layer is preferably made of an aluminum foil or an aluminum alloy foil, in order to reduce weight. The laminate film may be formed into the shape of the container member, by heat-sealing.

A wall thickness of the metal container is, for example, 1 mm or less, more preferably 0.5 mm or less, and further preferably 0.2 mm or less.

The metal container is made, for example, of aluminum or an aluminum alloy. The aluminum alloy preferably includes elements such as magnesium, zinc, and silicon. In a case where the aluminum alloy includes a transition metal such as iron, copper, nickel, or chromium, a content thereof is preferably 100 ppm by mass or less.

The shape of the container member is not particularly limited. The shape of the container member may be, for example, flat (thin), prismatic, cylindrical, coin-shaped, or button-shaped. The container member may be appropriately selected depending on the battery dimensions and the use of the battery.

### 6) Negative Electrode Terminal

The negative electrode terminal can be formed of a material that is electrochemically stable at the alkali metal (for example, lithium) insertion/extraction potential of the aforementioned negative electrode active material and has conductivity. Specific examples of the material for the negative electrode terminal include copper, nickel, stainless steel, and aluminum, and aluminum alloys including at least one selected from the group consisting of Mg, Ti, Zn, Mn, Fe, Cu, and Si. Aluminum or an aluminum alloy is preferably used as the material for the negative electrode terminal. The negative electrode terminal is preferably made of the same material as the negative electrode current collector, in order to reduce contact resistance between the negative electrode terminal and the negative electrode current collector.

### 7) Positive Electrode Terminal

The positive electrode terminal can be formed of a material that is electrically stable in a potential range of 3 V or more and 4.5 V or less (vs. Li/Li⁺) relative to the oxidation-reduction potential of lithium, and having electrical conductivity. Examples of the material for the positive electrode terminal include aluminum and aluminum alloys including at least one selected from the group consisting of Mg, Ti, Zn, Mn, Fe, Cu, and Si. The positive electrode terminal is preferably formed of the same material as the positive electrode current collector, in order to reduce contact resistance between the positive electrode terminal and the positive electrode current collector.

In the battery including the negative electrode, the positive electrode, the electrolyte, the separator, the container member, the negative electrode terminal, and the positive electrode terminal, an alkali metal or alkali metal ions can be inserted into and extracted from the active material. Preferred examples of the alkali metal include lithium and sodium. When sodium or sodium ions are inserted into and extracted from the active material, the positive electrode desirably contains at least one selected from the group consisting of a sodium transition metal oxide, a sodium transition metal phosphate compound, and a Prussian blue analogous complex. In addition, the negative electrode desirably contains at least one selected from the group consisting of hard carbon, graphite, an alloy, an oxide, and a sulfide. On the other hand, the electrolyte desirably contains a sodium salt.

A method for confirming the electrode active material will be described.

In a case where the electrode to be measured is incorporated in the battery, for example, the electrode is taken out from the battery as follows. First, the battery is discharged to 0.0 V to be in an over-discharged state. Next, the battery is disassembled in a glove box filled with argon to take out the electrode. When the electrode constitutes the electrode group together with the opposite electrode, the separator, and the like, the electrode group is taken out and disassembled, and the electrode to be measured is separated from the electrode group.

The active material can be identified by analysis of a crystal structure by X-ray diffraction spectroscopy (XRD spectroscopy) and composition analysis by inductively coupled plasma (ICP) emission spectroscopy.

The XRD measurement can be performed, for example, as follows.

First, in order to grasp the crystal state of the active material, alkali metal ions such as lithium ions are completely extracted from the active material. For example, in the case of an electrode used for the negative electrode of the battery, the battery is brought into a completely discharged state. For example, discharging the battery at a current of 0.1 C in an environment of 25°C until the rated end voltage or the battery voltage reaches 1.0 V is repeated a plurality of times so that the current value at the time of discharging is 1/100 or less of the rated capacity, whereby the battery can be brought into a discharged state. Residual alkali metal ions may be present even in the discharged state.

The battery is then disassembled in an argon-filled glove box, and the electrode is taken out and washed with a suitable solvent. As the suitable solvent, for example, dimethyl carbonate can be used. Insufficient cleaning of the electrode may result in mixing of an impurity phase such as lithium carbonate or lithium fluoride due to the influence of lithium ions remaining in the electrode. In that case, it is preferable to use an airtight container in which the measurement atmosphere can be performed in an inert gas. The washed electrode is cut so as to have the same area as the area of the holder of the powder X-ray diffractometer to obtain a measurement sample. This sample is directly pasted onto the glass holder for measurement.

At this time, peaks derived from a metal foil as the current collector, the conductive agent, the binder, and the like are measured in advance using XRD and grasped. Of course, this operation can be omitted if these can be grasped in advance. When the peak of the current collector and the peak of the active material overlap, it is desirable to peel off the active material-containing layer from the current collector for measurement. This is to separate overlapping peaks when quantitatively measuring the peak intensity. The active material-containing layer may be, for example, physically peeled off as described above, or may be peeled off by being immersed in a solvent such as water. In the latter case, an electrode mixture (containing the active material, the conductive agent, and the binder) can be recovered by volatilizing the solvent. The powder X-ray diffraction measurement of the active material can be performed by filling the recovered electrode mixture in, for example, a capillary made of Lindemann glass or the like and performing the measurement.

As an apparatus for powder X-ray diffraction measurement, SmartLab manufactured by Rigaku Corporation, for example, is used. The measurement conditions are as follows:
X-ray source: Cu target
Output: 45kV 200mA
Soller slit: 5° for both incident light and received light
Step width (2θ): 0.02 deg
Scan speed: 20 deg/min
Semiconductor detector: D/teX Ultra 250
Measurement range: 5° ≤ 2θ ≤ 90°
Sample plate holder: flat glass sample plate holder (thickness: 0.5 mm).

When any other apparatus is used, measurement is performed using standard Si powder for powder X-ray diffraction so that the equivalent measurement results as above can be obtained, and the conditions are adjusted so that the peak intensity and peak top position match those of the apparatus. Then, measurement is made.

The composition of the active material is measured by ICP emission spectroscopy according to the following procedures.

The active material-containing layer is peeled off from the electrode taken out from the battery and cleaned, by the method described above. Next, the peeled portion is heated in the atmosphere for a short time (for example, about 1 hour at 500°C) to burn off unnecessary components such as the binder component and the conductive agent. By dissolving this residue with an acid, a liquid sample containing the active material can be prepared. At this time, hydrochloric acid, nitric acid, sulfuric acid, hydrogen fluoride, or the like can be used as the acid. By subjecting this liquid sample to ICP analysis, the average composition in the active material can be known.

### <Manufacturing Method>

A method for manufacturing a battery according to an approach will be described below. The battery according to the approach can be manufactured, for example, by appropriately adjusting conditions such as a combination of an active material and a current collector, a coating amount of a slurry containing the active material, a press condition at the time of manufacturing an electrode, an amount of the electrolyte, and an initial charge condition.

For example, with respect to an amount of the electrolytic solution, it is desirable to increase the injection coefficient. Here, the injection coefficient is an amount of the electrolytic solution when the total void volume of the positive electrode and the negative electrode is 1. The void volume of the positive electrode and the void volume of the negative electrode are calculated based on the true density of the material constituting each electrode and the size of each electrode. The injection coefficient is desirably in a range of 1.15 times or more and 1.4 times or less. Note that the optimum injection coefficient can vary under the influence of the method of forming the wavy shape, the restraint state of the secondary battery at the time of initial charge, and the like.

The initial charge is desirably performed in a state in which two wide surfaces (two surfaces intersecting with the thickness direction) of the secondary battery are restrained from both sides. An example of a restraint method is illustrated in FIG. 13. A plurality of the secondary batteries 100 are housed in a box-shaped tray 14 such that wide surfaces (xy planes) are in contact with each other. Next, the secondary batteries 100 are pressurized in a thickness direction 16 (z-axis direction) by a restraint jig 15. Since the positive electrode terminal 6 and the negative electrode terminal 7 extending in the y-axis direction from each secondary battery 100 are located outside the tray 14, a pressure is not applied thereto. As described above, the secondary battery 100 is initially charged while being pressurized in the thickness direction 16 (z-axis direction), and the injection coefficient is appropriately adjusted, whereby the secondary battery of the approach can be manufactured.

In addition, the secondary battery of the approach can also be manufactured by a technique in which the coating amount of the outer edge portion of the electrode is made smaller than the other coating amounts, and the electrode is continuously pressed to perform processing using a difference in press elongation rate for each basis weight per unit area.

The secondary battery according to the first approach includes an electrode group having a stacked structure including one electrode, the other electrode, and a separator positioned at least between the one electrode and the other electrode. In a direction intersecting a stacking direction of the electrode group, at least one side of the one electrode protrudes more than at least one side of the other electrode. The electrode group satisfies the formula (1): Ra2 > Ra1. In the formula (1), the Ra2 is an arithmetic average roughness of an end portion including at least the one side of the one electrode of the electrode group, and the Ra1 is an arithmetic average roughness of an interior portion adjacent to the end portion of the electrode group. According to the secondary battery according to the first approach, it is possible to enhance the retention of the electrolyte while securing the flatness and thermal uniformity of the battery. This can improve the life performance.

### (Second Approach)

According to a second approach, a battery module is provided. The battery module includes a plurality of the batteries according to the approach.

In the battery module, each of unit cells may be disposed to be electrically connected in series or in parallel, or may be disposed in a combination of series connection and parallel connection.

A battery module according to the approach includes the battery according to the approach. Therefore, long life performance can be exhibited.

### (Third Approach)

According to a third approach, a battery pack is provided. The battery pack includes the battery module according to the approach. The battery pack may include a single battery according to the approach, in place of the battery module according to the approach.

The battery pack may further include a protective circuit. The protective circuit has a function to control charge and discharge of the secondary battery. Alternatively, a circuit included in an apparatus where the battery pack is used as a power source (for example, an electronic device or an automobile) may be used as the protective circuit for the battery pack.

Moreover, the battery pack may further include an external power distribution terminal. The external power distribution terminal is configured to externally output current from the secondary battery, and/or to input external current into the secondary battery. In other words, in a case where the battery pack is used as a power source, the current is supplied outside via the external power distribution terminal. When the battery pack is charged, charge current (including regenerative energy of motive force of a vehicle such as an automobile) is supplied to the battery pack via the external power distribution terminal.

Next, an example of the battery pack according to the approach will be described, with reference to the drawings.

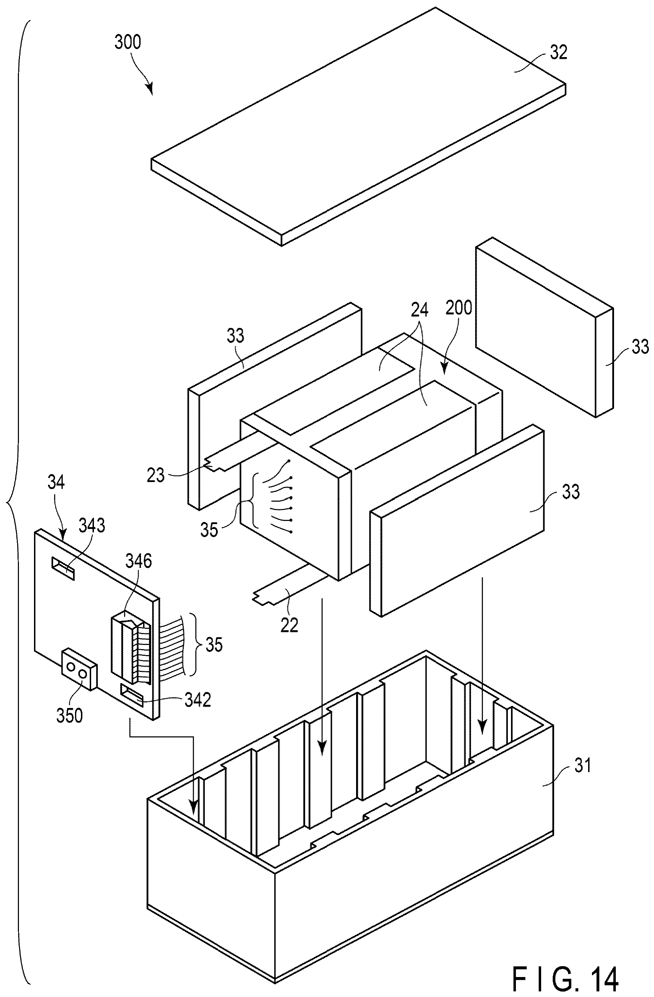

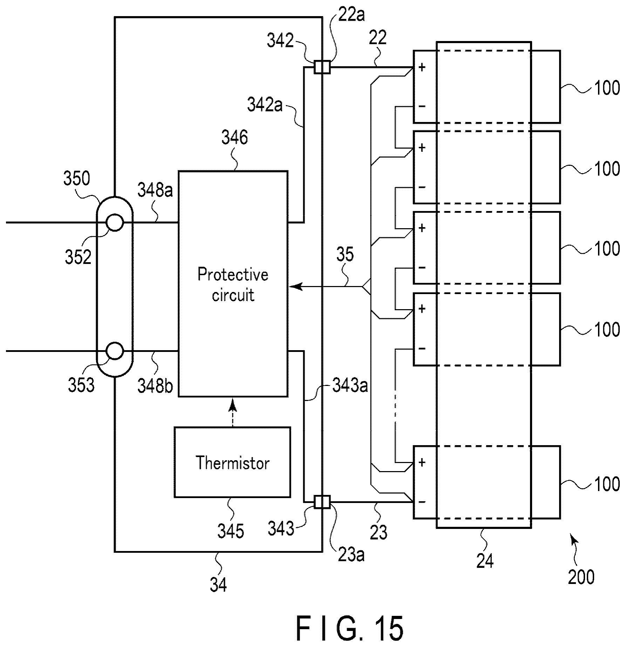

FIG. 14 is an exploded perspective view schematically illustrating an example of a battery pack. FIG. 15 is a block diagram illustrating an example of an electric circuit of the battery pack illustrated in FIG. 14.

A battery pack 300 as illustrated in FIGS. 14 and 15 includes a housing container 31, a lid 32, protective sheets 33, a battery module 200, a printed wiring board 34, wirings 35, and an insulating plate (not illustrated).

The housing container 31 illustrated in FIG. 14 is a prismatic bottomed container having a rectangular bottom surface. The housing container 31 is configured to be capable of housing the protective sheets 33, the battery module 200, the printed wiring board 34, and the wirings 35. The lid 32 has a rectangular shape. The lid 32 covers the housing container 31 to house the battery module 200 and the like. Although not illustrated, the housing container 31 and the lid 32 are provided with openings, connection terminals, or the like for connection to an external device or the like.

The battery module 200 includes a plurality of unit cells 100, a positive electrode-side lead 22, a negative electrode-side lead 23, and adhesive tapes 24.

At least one of the unit cells 100 is the secondary battery according to the approach. The unit cells 100 are electrically connected in series, as illustrated in FIG. 15. The unit cells 100 may be electrically connected in parallel, or connected in a combination of in series and in parallel. If the unit cells 100 are connected in parallel, battery capacity increases as compared to a case in which they are connected in series.

The adhesive tapes 24 fasten the unit cells 100. Instead of the adhesive tape 24, a heat-shrinkable tape may be used to fix the unit cells 100. In this case, the protective sheets 33 are disposed on both side surfaces of the battery module 200, and the heat shrinkable tape is wound around the battery module 200 and protective sheets 33. After that, the heat shrinkable tape is shrunk by heating to bundle the unit cells 100.

One end of the positive electrode-side lead 22 is connected to the battery module 200. The one end of the positive electrode-side lead 22 is electrically connected to positive electrode(s) of one or more of the unit cells 100. One end of the negative electrode-side lead 23 is connected to the battery module 200. The one end of the negative electrode-side lead 23 is electrically connected to negative electrode(s) of one or more of the unit cells 100.

The printed wiring board 34 is provided along one face in the short side direction among inner surfaces of the housing container 31. The printed wiring board 34 includes a positive electrode-side connector 342, a negative electrode-side connector 343, a thermistor 345, a protective circuit 346, wirings 342a and 343a, an external power distribution terminal 350, a plus-side wiring (positive-side wiring) 348a, and a minus-side wiring (negative-side wiring) 348b. One principal surface of the printed wiring board 34 faces a side surface of the battery module 200. An insulating plate (not illustrated) is sandwiched between the printed wiring board 34 and the battery module 200.

The other end 22a of the positive electrode-side lead 22 is electrically connected to the positive electrode-side connector 342. The other end 23a of the negative electrode-side lead 23 is electrically connected to the negative electrode-side connector 343.

The thermistor 345 is fixed to one principal surface of the printed wiring board 34. The thermistor 345 detects the temperature of each of the unit cells 100 and transmits detection signals to the protective circuit 346.

The external power distribution terminal 350 is fixed to the other principal surface of the printed wiring board 34. The external power distribution terminal 350 is electrically connected to a device that exists outside the battery pack 300. The external power distribution terminal 350 includes a positive-side terminal 352 and a negative-side terminal 353.

The protective circuit 346 is fixed to the other principal surface of the printed wiring board 34. The protective circuit 346 is connected to the positive-side terminal 352 via the plus-side wiring 348a. The protective circuit 346 is connected to the negative-side terminal 353 via the minus-side wiring 348b. In addition, the protective circuit 346 is electrically connected to the positive electrode-side connector 342 via the wiring 342a. The protective circuit 346 is electrically connected to the negative electrode-side connector 343 via the wiring 343a. Furthermore, the protective circuit 346 is electrically connected to each of the unit cells 100 via the wiring 35.

The protective sheets 33 are disposed on both inner side surfaces of the housing container 31 in the long side direction and on the inner side surface in the short side direction facing the printed wiring board 34 across the battery module 200. The protective sheets 33 are made of, for example, resin or rubber.

The protective circuit 346 controls charge and discharge of the unit cells 100. The protective circuit 346 is also configured to cut-off electric connection between the protective circuit 346 and the external power distribution terminal 350 (positive-side terminal 352, negative-side terminal 353) to an external device, based on detection signals transmitted from the thermistor 345 or detection signals transmitted from each of the unit cells 100 or the battery module 200.

An example of the detection signal transmitted from the thermistor 345 is a signal indicating that the temperature of the unit cell(s) 100 is detected to be a predetermined temperature or higher. Examples of the detection signal transmitted from each of the unit cells 100 or the battery module 200 include signals indicating detection of over-charge, over-discharge, and overcurrent of the unit cell(s) 100. In a case where over-charge or the like for each of the unit cells 100 is detected, the battery voltage may be detected, or a positive electrode potential or negative electrode potential may be detected. In the latter case, a lithium electrode to be used as a reference electrode is inserted into each of the unit cells 100.

Note that, as the protective circuit 346, a circuit included in a device (for example, an electronic device or an automobile) that uses the battery pack 300 as a power source may be used.

As described above, the battery pack 300 includes the external power distribution terminal 350. Hence, the battery pack 300 can output current from the battery module 200 to an external device and input current from an external device to the battery module 200 via the external power distribution terminal 350. In other words, when the battery pack 300 is used as a power source, the current from the battery module 200 is supplied to an external device via the external power distribution terminal 350. When the battery pack 300 is charged, a charge current from an external device is supplied to the battery pack 300 via the external power distribution terminal 350. If the battery pack 300 is used as an onboard battery, regenerative energy of motive force of a vehicle can be used as the charge current from the external device.

Note that the battery pack 300 may include a plurality of the battery modules 200. In this case, the battery modules 200 may be connected in series, may be connected in parallel, or may be connected in a combination of in series and in parallel. The printed wiring board 34 and the wirings 35 may be omitted. In this case, the positive electrode-side lead 22 and the negative electrode-side lead 23 may respectively be used as the positive-side terminal 352 and negative-side terminal 353 of the external power distribution terminal 350.

Such a battery pack is used, for example, in applications where excellent cycle performance is demanded when a large current is extracted. More specifically, the battery pack is used as, for example, a power source for electronic devices, a stationary battery, or an onboard battery for various types of vehicles. An example of the electronic device can be a digital camera. The battery pack is particularly suitably used as the onboard battery.

The battery pack according to the third approach includes the secondary battery according to the approach or the battery module according to the approach. Therefore, the life performance of the battery pack is long.

### Examples

Examples will be described below, but the approaches are not limited to the examples which will be described below.

### (Example 1)

### <Production of Negative Electrode>

As a negative electrode active material, monoclinic titanium-niobium composite oxide particles having a composition represented by the formula TiNb₂O₇ were prepared. These particles are referred to as niobium-containing oxide. Carbon nanotubes (CNTs) and acetylene black (AB) as conductive agents, and carboxymethyl cellulose (CMC) and styrene-butadiene rubber (SBR) as binders were prepared. These were mixed in pure water so that the mass ratio of the negative electrode active material:AB:CNT:CMC:SBR was 96.2:0.5:0.3:2:1 to obtain a slurry.

This slurry was applied onto both front and back principal surfaces of a current collector made of an aluminum foil having a thickness of 15 µm except for both long side portions, and the coating film was dried. The current collector of the slurry non-coated portion functions as a negative electrode collector tab. Thus, a stack including the current collector, the negative electrode active material-containing layers formed on both sides of the current collector except for both long side portions, and the negative electrode collector tab was obtained. Next, the obtained stack was subjected to roll pressing so that the density of the negative electrode active material-containing layer was 2.7 g/cm³.

### <Production of Positive Electrode>

As a positive electrode active material, particles of a lithium nickel cobalt manganese composite oxide represented by the formula: LiNi_{0.5}Co_{0.2}Mn_{0.3}O₂ were prepared. In addition, acetylene black (AB) as a conductive agent and polyvinylidene fluoride (PVdF) as a binder were prepared. These were mixed so that the mass ratio of the positive electrode active material:AB:PVdF was 90:5:5 to obtain a mixture. Next, the obtained mixture was dispersed in an n-methylpyrrolidone (NMP) solvent to prepare a positive electrode slurry. This slurry was applied onto both front and back principal surfaces of a current collector made of an aluminum foil having a thickness of 15 µm except for both long side portions, and the coating film was dried. The current collector of the slurry non-coated portion functions as a positive electrode collector tab. Thus, a stack including the current collector, the positive electrode active material-containing layers formed on both sides of the current collector except for both long side portions, and the positive electrode collector tab was obtained. Next, the obtained stack was subjected to roll pressing so that the density of the positive electrode active material-containing layer was 3.05 g/cm³.

### <Manufacture of Electrode Group>

A polyethylene (PE) separator having a thickness of 15 µm was prepared. A flat electrode group was produced by winding the negative electrode and the positive electrode in a flat spiral shape with a separator interposed therebetween. In the obtained electrode group, at one end portion in the winding axis direction, the separator, the negative electrode active material-containing layer, and the positive electrode active material-containing layer are located inside the positive electrode collector tab in this order. At the other end portion of the electrode group in the winding axis direction, the separator, the negative electrode active material-containing layer, and the positive electrode active material-containing layer were located inside the negative electrode collector tab in this order. Accordingly, at both end portions in the winding axis direction of the electrode group, each long side portion of the negative electrode active material-containing layer protruded more than each long side portion of the corresponding positive electrode active material-containing layer. An aluminum positive electrode terminal was welded to the positive electrode collector tab, and an aluminum negative electrode terminal was welded to the negative electrode collector tab.

### <Preparation of Nonaqueous Electrolyte>

A nonaqueous electrolyte was prepared by the following procedures. First, propylene carbonate (PC) and diethyl carbonate (DEC) were mixed so that the volume ratio PC:DEC was 1:2 to obtain a mixed solvent. Lithium hexafluorophosphate LiPF₆ was dissolved in the mixed solvent at a concentration of 1 M to obtain a liquid nonaqueous electrolyte.

### <Assembly of Battery>

The electrode group was housed in an aluminum metal can having a plate thickness of 0.2 mm, and vacuum-dried. Next, the electrolytic solution was injected at an injection coefficient of 1.3. After the injection, the metal can was sealed to manufacture a battery. Here, the injection coefficient is an amount of the electrolytic solution when the total void volume of the positive electrode and the negative electrode is 1. The void volume of the positive electrode and the void volume of the negative electrode were calculated based on the true density of the material constituting each electrode and the size of each electrode.

Next, in a state in which the obtained secondary battery was pressurized from both sides of the wide two surfaces (pressurized in the battery thickness direction), the battery was initially charged until the state of charge (SOC) reached 100% to manufacture a secondary battery of Example 1.

### (Example 2)

An electrode group was produced in the same manner as described in Example 1. The electrode group was housed in a container made of a laminate film and vacuum-dried. Next, the electrolytic solution was injected at an injection coefficient as shown in Table 1. After the injection, the container was sealed to manufacture a battery. As the laminate film, a laminate film having a total thickness of 0.1 mm in which polypropylene layers were formed on both sides of an aluminum foil having a thickness of 40 µm was used.

Next, the obtained secondary battery was initially charged in the same manner as described in Example 1 to manufacture a secondary battery of Example 2.

### (Example 3)

### <Production of Negative Electrode>

The slurry prepared in the same manner as described in Example 1 was applied onto both the front and back principal surfaces of a current collector made of an aluminum foil having a thickness of 15 µm except for one short side portion, and the coating film was dried. The current collector of the slurry non-coated portion functions as a negative electrode collector tab. Thus, a stack including the current collector, the negative electrode active material-containing layers formed on both sides of the current collector except for the short side portion, and the negative electrode collector tab was obtained. Next, the obtained stack was subjected to roll pressing so that the density of the negative electrode active material-containing layer was 2.7 g/cm³.

### <Production of Positive Electrode>

The slurry prepared in the same manner as described in Example 1 was applied onto both the front and back principal surfaces of a current collector made of an aluminum foil having a thickness of 15 µm except for one short side portion, and the coating film was dried. The current collector of the slurry non-coated portion functions as a positive electrode collector tab. Thus, a stack including the current collector, the positive electrode active material-containing layers formed on both sides of the current collector except for the short side portion, and the positive electrode collector tab was obtained. Next, the obtained stack was subjected to roll pressing so that the density of the positive electrode active material-containing layer was 3.05 g/cm³.

### <Manufacture of Electrode Group>

A polyethylene (PE) separator having a thickness of 15 µm was prepared. A flat electrode group was produced by alternately stacking the negative electrode and the positive electrode with a separator interposed therebetween. In the four side portions of the obtained electrode group, the negative electrode active material-containing layer and the positive electrode active material-containing layer were located in this order inside the separator. An aluminum positive electrode terminal was welded to the positive electrode collector tab, and an aluminum negative electrode terminal was welded to the negative electrode collector tab.

### <Preparation of Nonaqueous Electrolyte>

A nonaqueous electrolyte was prepared in the same procedures as in Example 1.

### <Assembly of Battery>

The electrode group was housed in an aluminum metal can having a plate thickness of 0.2 mm, and vacuum-dried. Next, the electrolytic solution was injected at an injection coefficient as shown in Table 1. After the injection, the metal can was sealed to manufacture a battery.

Next, the obtained secondary battery was initially charged in the same manner as described in Example 1 to manufacture a secondary battery of Example 1.

### (Example 4)

A secondary battery was manufactured in the same manner as in Example 3 except that the injection coefficient was changed to the value as shown in Table 1.

### (Example 5)

A stack-type electrode group was produced in the same manner as described in Example 3. The electrode group was housed in the same container made of a laminate film as in Example 2, and vacuum-dried. Next, the electrolytic solution was injected at an injection coefficient as shown in Table 1. After the injection, the container was sealed to manufacture a battery.

Next, the obtained secondary battery was initially charged in the same manner as described in Example 1 to manufacture a secondary battery.

### (Example 6)

A secondary battery was manufactured in the same manner as in Example 5 except that the injection coefficient was changed to the value as shown in Table 1.

### (Example 7)

A stack-type electrode group was produced in the same manner as described in Example 3. The electrode group was housed in the same container made of a laminate film as in Example 2, and vacuum-dried. Next, the electrolytic solution was injected at an injection coefficient as shown in Table 1. After the injection, the container was sealed to manufacture a battery.

Next, a surface pressure of 0.3 MPa was applied to a surface intersecting the thickness direction of the obtained secondary battery to restrain the surface, and then the secondary battery was held in the restrained state for 3 hours. Next, the surface pressure was adjusted to 0.3 MPa again by retightening. Thereafter, the battery was initially charged until the state of charge (SOC) reached 100% to manufacture a secondary battery.

### (Example 8)

### <Production of Negative Electrode>

The slurry prepared in the same manner as described in Example 1 was applied onto both the front and back principal surfaces of a current collector made of an aluminum foil having a thickness of 15 µm except for one short side portion. In addition, the coating amount was adjusted so that the electrode basis weight per unit area from both long side portions to the inside by 3 mm on both the front and back principal surfaces of the current collector was 10% less than the other electrode basis weight per unit area. Subsequently, after the coating film was dried, continuous roll pressing was performed to form wavy shapes on both long side portions of the negative electrode.

A flat electrode group was produced by alternately stacking the negative electrode and the same positive electrode as in Example 3 with the same separator as in Example 3 interposed therebetween. In both long side portions of the obtained electrode group, the negative electrode active material-containing layer and the positive electrode active material-containing layer were located in this order inside the separator. An aluminum positive electrode terminal was welded to the positive electrode collector tab, and an aluminum negative electrode terminal was welded to the negative electrode collector tab.

The obtained electrode group was housed in the same container made of a laminate film as in Example 2, and vacuum-dried. Next, the electrolytic solution was injected at an injection coefficient as shown in Table 1. After the injection, the container was sealed to manufacture a battery.

Subsequently, a surface pressure of 0.3 MPa was applied to a surface intersecting the thickness direction of the obtained secondary battery to restrain the surface, and then the battery was initially charged until the state of charge (SOC) reached 100% to manufacture a secondary battery.

### (Example 9)

A secondary battery was manufactured in the same manner as in Example 8 except that a negative electrode was produced by the method described below and the injection coefficient was set to the value as shown in Table 1.

Production of a negative electrode was performed in the same manner as in Example 1 except that graphite was used as the active material in place of the monoclinic titanium-niobium composite oxide, and that the density of the negative electrode active material-containing layer was 1.6 g/cm³.

### (Example 10)

A secondary battery was manufactured in the same manner as in Example 5 except that a negative electrode was produced by the method described below and that the injection coefficient was set to the value as shown in Table 1.

Production of a negative electrode was performed in the same manner as in Example 1 except that an active material obtained by mixing graphite and silicon oxide (SiOₓ, x ≈ 1.0) at a mass ratio of 95:5 was used as the active material in place of the monoclinic titanium-niobium composite oxide, and that the density of the negative electrode active material-containing layer was 1.6 g/cm³.

### (Example 11)

A positive electrode, a negative electrode, and an electrolytic solution were prepared by the method described below.

Production of a positive electrode was performed in the same manner as in Example 1 except that Na₄Fe₃(PO₄)₂P₂O₇ was used as the active material in place of the lithium nickel cobalt manganese composite oxide, and that the density of the positive electrode active material-containing layer was 1.8 g/cm³.

Production of a negative electrode was performed in the same manner as in Example 1 except that hard carbon was used as the active material in place of the monoclinic titanium-niobium composite oxide, and that the density of the negative electrode active material-containing layer was 1.4 g/cm³.

As the electrolytic solution, a liquid nonaqueous electrolyte having the same composition as in Example 1 was prepared.

A stack-type electrode group was produced in the same manner as described in Example 3 using the produced positive electrode and negative electrode and the same separator as in Example 3. The electrode group was housed in the same container made of a laminate film as in Example 2, and vacuum-dried. Next, the electrolytic solution was injected at an injection coefficient as shown in Table 1. After the injection, the container was sealed to manufacture a battery.

Next, the obtained secondary battery was initially charged in the same manner as described in Example 1 to manufacture a secondary battery.

### (Example 12)

A stack-type electrode group was produced in the same manner as described in Example 3. The electrode group was housed in the same container made of a laminate film as in Example 2, and vacuum-dried. Next, the electrolytic solution was injected at an injection coefficient as shown in Table 1. After the injection, the container was sealed to manufacture a battery.

Next, a surface pressure of 0.3 MPa was applied to a surface intersecting the thickness direction of the obtained secondary battery to restrain the surface, and then the secondary battery was held in the restrained state for 3 hours. Next, the surface pressure was adjusted to 0.3 MPa again by retightening. Thereafter, the battery was initially charged until the state of charge (SOC) reached 100% to manufacture a secondary battery.

### (Comparative Example 1 and Comparative Example 2)

A secondary battery was manufactured in the same manner as in Example 5 except that the injection coefficient was changed to the value as shown in Table 1.

### (Comparative Example 3)

A secondary battery was manufactured in the same manner as in Example 12 except that the injection coefficient was changed to the value as shown in Table 1.

### (Comparative Example 4)

A secondary battery was manufactured in the same manner as in Example 9 except that the injection coefficient was changed to the value as shown in Table 1.

### (Comparative Example 5)

A secondary battery was manufactured in the same manner as in Example 10 except that the injection coefficient was changed to the value as shown in Table 1.

### (Comparative Example 6)

A secondary battery was manufactured in the same manner as in Example 11 except that the injection coefficient was changed to the value as shown in Table 1.

The arithmetic average roughness Ra1 and Ra2, the negative electrode thickness dₐ, the arithmetic average roughnesses R1cell and R2cell, and the cell thickness d_{c} of each obtained secondary battery were measured by the above-described methods, and the results are shown in Tables 1 and 2. In the secondary batteries of Examples 1, 3, and 4, a metal can was used, and thus the arithmetic average roughnesses R1cell and R2cell, and the cell thickness d_{c} were not measured.

In addition, in Examples 2 and 5 to 12 and Comparative Example 1 to 6 of a pouch cell using the container made of a laminate film, restraint was performed while a restraint pressure of 0.2 MPa was applied to the whole of a set of 7 batteries (cells). Under BMU monitoring in which each cell was adjusted to an SOC of 0% to 100%, a cycle test at an SOC of 0% to 100% was performed in a cycle in which 1 C discharge was performed after 1 C charge at a measurement environmental temperature of 25°C. At this time, the total thickness of 7 batteries (cells) at the time of application of 0.2 MPa is shown as the battery module thickness in Table 2. The life at 1000 cycles was defined as cycle life, and is shown in Table 2.

For the secondary batteries of Examples 1, 3, and 4 using metal cans, a cycle test at an SOC of 0% to 100% was performed in a cycle in which 1 C discharge was performed after 1 C charge at a measurement environmental temperature of 25°C. The capacity retention rate (%) at 1000 cycles is shown in Table 2 as the cycle life.

**Table 1**

| **Table 1** | **Ra1 (µm)** | **Ra2 (µm)** | **Ra2/Ra1** | **Negative electrode thickness dₐ (µm)** | **Negative electrode material** | **Negative electrode current collector** | **Injection coefficient** | **Battery type** |
|---|---|---|---|---|---|---|---|---|
| **Example 1** | **39** | **98** | **2.5** | **100** | **Niobium-containing oxide** | **Al** | **1.3** | **Wound-type rectangular can** |
| **Example 2** | **.42** | **98** | **2.3** | **100** | **Niobium-containing oxide** | **Al** | **1.35** | **Wound-type pouch cell** |
| **Example 3** | **42** | **91** | **2.2** | **100** | **Niobium-containing oxide** | **Al** | **1.3** | **Stacked metal can** |
| **Example 4** | **49** | **220** | **4.5** | **100** | **Niobium-containing oxide** | **Al** | **1.35** | **Stacked metal can** |
| **Example 5** | **142** | **210** | **1.5** | **100** | **Niobium-containing oxide** | **Al** | **1.25** | **Stacked pouch cell** |
| **Example 6** | **321** | **820** | **2.6** | **100** | **Niobium-containing oxide** | **Al** | **1.3** | **Stacked pouch cell** |
| **Example 7** | **105** | **140** | **7.0** | **100** | **Niobium-containing oxide** | **Al** | **1.3** | **Stacked pouch cell** |
| **Example 8** | **98** | **140** | **1.4** | **100** | **Niobium-containing oxide** | **Al** | **1.15** | **Stacked pouch cell** |
| **Example 9** | **102** | **155** | **1.5** | **150** | **Graphite** | **Cu** | **1.35** | **Stacked pouch cell** |
| **Example 10** | **301** | **910** | **3.0** | **130** | **Si and graphite** | **Cu** | **1.35** | **Stacked pouch cell** |
| **Example 11** | **168** | **720** | **4.3** | **100** | **Hard carbon/Na** | **Al** | **1.35** | **Stacked pouch cell** |
| **Example 12** | **302** | **915** | **3.0** | **100** | **Niobium-containing oxide** | **Al** | **1.4** | **Stacked pouch cell** |
| **Comparative Example 1** | **20** | **18** | **0.9** | **100** | **Niobium-containing oxide** | **Al** | **1.15** | **Stacked pouch cell** |
| **Comparative Example 2** | **1308** | **1090** | **0.8** | **100** | **Niobium-containing oxide** | **Al** | **1.4** | **Stacked pouch cell** |
| **Comparative Example 3** | **1529** | **1310** | **0.9** | **100** | **Niobium-containing oxide** | **Al** | **1.5** | **Stacked pouch cell** |
| **Comparative Example 4** | **98** | **84** | **0.9** | **150** | **Graphite** | **Cu** | **1.3** | **Stacked pouch cell** |
| **Comparative Example 5** | **82** | **80** | **1.0** | **130** | **Si and graphite** | **Cu** | **1.25** | **Stacked pouch cell** |
| **Comparative Example 6** | **80** | **79** | **1.0** | **100** | **Hard carbon/Na** | **Al** | **1.25** | **Stacked pouch cell** |

**Table 2**

| **Table 2** | **Wave-forming method** | **R1cell (µm)** | **R2cell (µm)** | **R2cell/ R1cell** | **Cell thickness d_{c} (mm)** | **Battery module thickness (mm)** | **Cycle life (%)** |
|---|---|---|---|---|---|---|---|
| **Example 1** | **Initial charge** | **-** | **-** | **-** | **-** | **-** | **92.8** |
| **Example 2** | **Initial charge** | **50** | **115** | **2.3** | **6** | **42.8** | **94.2** |
| **Example 3** | **Initial charge** | **-** | **-** | **-** | **-** | **-** | **93.9** |
| **Example 4** | **Initial charge** | **-** | **-** | **-** | **-** | **-** | **95.2** |
| **Example 5** | **Initial charge** | **135** | **190** | **1.4** | **11.7** | **85.6** | **94.8** |
| **Example 6** | **Initial charge** | **295** | **790** | **2.7** | **11.9** | **89.1** | **95** |
| **Example 7** | **After holding time, retightening restraint/initial charge** | **90** | **700** | **7.8** | **11.9** | **84.7** | **97.5** |
| **Example 8** | **Machining** | **80** | **125** | **1.6** | **12** | **84.6** | **94.2** |
| **Example 9** | **Machining** | **82** | **125** | **1.5** | **12** | **84.9** | **89** |
| **Example 10** | **Initial charge** | **280** | **791** | **2.8** | **12** | **86.2** | **83.1** |
| **Example 11** | **Initial charge** | **148** | **562** | **3.8** | **12** | **84.9** | **92** |
| **Example 12** | **After holding time, retightening restraint/initial charge** | **291** | **1040** | **3.6** | **12.2** | **89.1** | **95.1** |
| **Comparative Example 1** | **Initial charge** | **80** | **72** | **0.9** | **11.7** | **83** | **89.2** |
| **Comparative Example 2** | **Initial charge** | **1210** | **1059** | **0.9** | **12** | **92.8** | **88.6** |
| **Comparative Example 3** | **After holding time, retightening restraint/initial charge** | **1420** | **1210** | **0.9** | **12** | **93.4** | **89.5** |
| **Comparative Example 4** | **Initial charge** | **80** | **72** | **0.9** | **12** | **84.9** | **86.2** |
| **Comparative Example 5** | **Initial charge** | **79** | **72** | **0.9** | **12** | **86.1** | **76.2** |
| **Comparative Example 6** | **Initial charge** | **85** | **79** | **0.9** | **12** | **84.3** | **86.2** |

As shown in Tables 1 and 2, when comparing Examples 1 to 8 and 12 and Comparative Examples 1 to 3 using the niobium-containing oxide as the negative electrode material, it is found that the cycle life of the secondary batteries of Examples 1 to 8 and 12 is superior to that of Comparative Examples 1 to 3. Also from the comparison between Example 9 and Comparative Example 4 using graphite as the negative electrode material, the comparison between Example 10 and Comparative Example 5 using Si as the negative electrode material, and the comparison between Example 11 and Comparative Example 6 of the sodium battery, it is found that the cycle life of the secondary batteries of the Examples is superior to that of the Comparative Examples.

In Examples 5 and 6, the ratio of the arithmetic average roughness R2cell to the arithmetic average roughness R1cell is larger in Example 6 than in Example 5. Therefore, the end portion of the electrode group of Example 6 had a wavy shape larger than that of Example 5. As a result, in Example 6, the thickness of the battery module after the charge and discharge cycle was larger than that in Example 5.

In Example 7, since R2cell/R1cell > 3 and R1cell < 0.02 d_{c} were satisfied, a long life was obtained.

In Example 8, the end portion of the electrode group is formed into a wavy shape by machining. Therefore, Ra2 was larger than Ra1 regardless of the injection coefficient.

From the results of Examples 9 to 11, it is found that the effect of improving the life performance can be obtained even with a negative electrode material other than the niobium-containing oxide.

In Comparative Example 1, although an attempt was made to form waviness by initial charge, a wavy shape could not be formed because the injection coefficient was unsuitable. Therefore, although the battery module thickness was smaller than that of Example 5, the life performance was inferior to that of Example 5.

In Comparative Example 2, the injection coefficient was slightly large, and no retightening was performed in the initial charge, and thus the entire electrode group was wavy.

In Comparative Example 3, although retightening was performed in the initial charge, the injection coefficient was large, and thus the entire electrode group was wavy.

The secondary battery of at least one approach described above includes an electrode group having a stacked structure including one electrode, the other electrode, and a separator positioned at least between the one electrode and the other electrode. In a direction intersecting a stacking direction of the electrode group, at least one side of the one electrode protrudes more than at least one side of the other electrode. The electrode group satisfies the formula (1): Ra2 > Ra1. In the formula (1), the Ra2 is an arithmetic average roughness of an end portion including at least the one side of the one electrode of the electrode group, and the Ra1 is an arithmetic average roughness of an interior portion adjacent to the end portion of the electrode group. According to the secondary battery according to the approach, the life performance can be improved.

While certain approaches have been described, these approaches have been presented by way of example only, and are not intended to limit the scope of the inventions. Indeed, the novel approaches described herein may be embodied in a variety of other forms; furthermore, various omissions, substitutions and changes in the form of the approaches described herein may be made without departing from the spirit of the inventions. The accompanying claims and their equivalents are intended to cover such forms or modifications as would fall within the scope and spirit of the inventions.

Some approaches according to the present invention will be described below.
<1>. A secondary battery comprising:
   a container member;
   an electrode group provided in the container member and having a stacked structure comprising one electrode, the other electrode, and a separator provided at least between the one electrode and the other electrode; and
   an electrolyte provided in the container member,
   at least one side of the one electrode protruding more than at least one side of the other electrode in a direction intersecting a stacking direction of the electrode group, and the electrode group satisfying the following formula (1): $Ra 2 > Ra 1$ (1)
   where the Ra2 is an arithmetic average roughness of an end portion including the at least one side of the one electrode in the electrode group, and the Ra1 is an arithmetic average roughness of an interior portion adjacent to the end portion of the electrode group.
<2>. The secondary battery according to <1>, wherein the one electrode is a negative electrode, and the other electrode is a positive electrode.
<3>. The secondary battery according to <1> or <2>, wherein the negative electrode comprises: a negative electrode active material-containing layer comprising at least one selected from the group consisting of niobium-containing oxide, hard carbon, and graphite; and a current collector holding the negative electrode active material-containing layer and comprising at least one of aluminum or an aluminum alloy.
<4>. The secondary battery according to any one of <1> to <3>, wherein the negative electrode comprises: a negative electrode active material-containing layer comprising at least one selected from the group consisting of a metal, a non-metal, and an alloy; and a current collector holding the negative electrode active material-containing layer and comprising at least one of copper or a copper alloy.
<5>. The secondary battery according to any one of <1> to <4>, wherein the electrode group satisfies the following formula (2): $Ra 2 / Ra 1 \geq 3$ (2).
<6>. The secondary battery according to any one of <1> to <5>, wherein the Ra2 satisfies the following formula (3): $Ra 2 \geq {d}_{a}$ (3) where the dₐ is a thickness of the negative electrode.
<7>. The secondary battery according to any one of <1> to <6>, wherein the container member is made of a laminate film, and satisfies the following formula (4): $R 2 cell > R 1 cell$ (4) where the R2cell is an arithmetic average roughness of at least one end portion at a wide surface of the secondary battery, and the R1cell is an arithmetic average roughness of an interior portion at the wide surface of the secondary battery.
<8>. The secondary battery according to any one of <1> to <7>, wherein the secondary battery satisfies the following formula (5): $R 2 cell / R 1 cell \geq 3$ (5).
<9>. The secondary battery according to any one of <1> to <8>, wherein the R1cell satisfies the following formula (6): $R 1 cell \leq 0 . 02 {d}_{c}$ (6) where the d_{c} is a thickness of the secondary battery.
<10>. A battery pack comprising the secondary battery according to any one of <1> to <9>.
<11>. The battery pack according to <10>, further comprising:
   an external power distribution terminal; and
   a protective circuit.
<12>. The battery pack according to <10> or <11>, further comprising a plurality of the secondary battery,
   the secondary batteries being electrically connected in series, in parallel, or in a combination of series connection and parallel connection.

## Claims

1. A secondary battery (100) comprising:
a container member (2);
an electrode group (1) provided in the container member (2) and having a stacked structure comprising one electrode (5), the other electrode (3), and a separator (4) provided at least between the one electrode (5) and the other electrode (3); and
an electrolyte provided in the container member (2),
at least one side of the one electrode (5) protruding more than at least one side of the other electrode (3) in a direction intersecting a stacking direction of the electrode group (1), and the electrode group (1) satisfying the following formula (1): $Ra 2 > Ra 1$ (1)
where the Ra2 is an arithmetic average roughness of an end portion including the at least one side of the one electrode (5) in the electrode group (1), and the Ra1 is an arithmetic average roughness of an interior portion adjacent to the end portion of the electrode group (1).

2. The secondary battery (100) according to claim 1, wherein the one electrode (5) is a negative electrode, and the other electrode (3) is a positive electrode.

3. The secondary battery (100) according to claim 2, wherein the negative electrode comprises: a negative electrode active material-containing layer comprising at least one selected from the group consisting of niobium-containing oxide, hard carbon, and graphite; and a current collector holding the negative electrode active material-containing layer and comprising at least one of aluminum or an aluminum alloy.

4. The secondary battery (100) according to claim 2, wherein the negative electrode comprises: a negative electrode active material-containing layer comprising at least one selected from the group consisting of a metal, a non-metal, and an alloy; and a current collector holding the negative electrode active material-containing layer and comprising at least one of copper or a copper alloy.

5. The secondary battery (100) according to claim 1, wherein the electrode group (1) satisfies the following formula (2): $Ra 2 / Ra 1 \geq 3$ (2).

6. The secondary battery (100) according to claim 2, wherein the Ra2 satisfies the following formula (3): $Ra 2 \geq {d}_{a}$ (3) where the dₐ is a thickness of the negative electrode.

7. The secondary battery (100) according to claim 1, wherein the container member (2) is made of a laminate film, and satisfies the following formula (4): $R 2 cell > R 1 cell$ (4) where the R2cell is an arithmetic average roughness of at least one end portion at a wide surface of the secondary battery (100), and the R1cell is an arithmetic average roughness of an interior portion at the wide surface of the secondary battery (100).

8. The secondary battery (100) according to claim 7, wherein the secondary battery (100) satisfies the following formula (5): $R 2 cell / R 1 cell \geq 3$ (5).

9. The secondary battery (100) according to claim 7, wherein the R1cell satisfies the following formula (6): $R 1 cell \leq 0 . 02 {d}_{c}$ (6) where the d_{c} is a thickness of the secondary battery (100).

10. A battery pack (300) comprising the secondary battery (100) according to claim 1.

11. The battery pack (300) according to claim 10, further comprising:
an external power distribution terminal; and
a protective circuit.

12. The battery pack (300) according to claim 11, further comprising a plurality of the secondary battery (100),
the secondary batteries (100) being electrically connected in series, in parallel, or in a combination of series connection and parallel connection.
